# EUROPEAN PATENT APPLICATION

(11) **EP 4 749 941 A1**
(43) Date of publication of application: **27.05.2026**
(21) Application number: 23945405.1
(22) Date of filing: 17.07.2023
(51) Int. Cl.: H04B 7/0413

(54) **PROCESSING METHOD AND APPARATUS, DEVICE, AND STORAGE MEDIUM USED FOR MEASUREMENT**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN); SHI, Zhihua, Dongguan, Guangdong 523860 (CN)
(74) Representative: RGTH
(86) International application number: PCT/CN2023/107790
(87) International publication number: WO 2025/015510

(57) **Abstract**

Disclosed are a processing method and apparatus, a device, and a storage medium for measurement, and belonging to the technical field of mobile communication. The method is executed by a terminal device, and comprises: receiving measurement indication information, the measurement indication information being used to indicate that measurement be performed on a spatial filter in one or more measurement sets to obtain a measurement result, the measurement result being used to predict link quality of the spatial filter in one or more prediction sets, to obtain a prediction result. The present solution provides a measurement indication solution for predicting a measurement result of a spatial filter, ensures measurement flexibility for the measurement result of the spatial filter, and improves prediction efficacy for the spatial filter.

## Description

### TECHNICAL FIELD

The present disclosure relates to the field of mobile communication technology, and specifically, to processing methods and apparatuses for measurement, devices, and a storage medium.

### BACKGROUND

In 5th generation new radio (5G NR) systems, in order to support beam management for terminal devices, the terminal needs to perform beam measurement on candidate cells adjacent to a serving cell.

In related art, in order to reduce the overhead of the terminal device for performing beam measurement, a solution is proposed in which based on measurement results of some beams by the terminal device, measurement results of other beams are predicted through a machine learning model.

### SUMMARY

The embodiments of the present disclosure provide processing methods and apparatuses for measurement, devices, and a storage medium. The technical solution is as follows:

In one aspect, the embodiments of the present disclosure provide a processing method for measurement. The method is performed by a terminal device, and the method includes:
receiving measurement indication information, the measurement indication information being used to indicate that measurement is to be performed on spatial filters in one or more measurement sets to obtain measurement results;
where the measurement results are used to predict link qualities of spatial filters in one or more prediction sets to obtain prediction results.

In one aspect, the embodiments of the present disclosure provide a processing method for measurement. The method is performed by a network device, and the method includes:
transmitting measurement indication information to a terminal device, the measurement indication information being used to indicate that the terminal device is to perform measurement on spatial filters in one or more measurement sets to obtain measurement results;
where the measurement results are used to predict link qualities of spatial filters in one or more prediction sets to obtain prediction results.

In another aspect, the embodiments of the present disclosure provide a processing apparatus for measurement. The device includes:
a receiving module, configured to receive measurement indication information, the measurement indication information being used to indicate that measurement is to be performed on spatial filters in one or more measurement sets to obtain measurement results;
where the measurement results are used to predict link qualities of spatial filters in one or more prediction sets to obtain prediction results.

In yet another aspect, the embodiments of the present disclosure provide a processing apparatus for measurement. The device includes:
a transmitting module, configured to transmit measurement indication information to a terminal device, the measurement indication information being used to indicate that the terminal device is to perform measurement on spatial filters in one or more measurement sets to obtain measurement results;
where the measurement results are used to predict link qualities of spatial filters in one or more prediction sets to obtain prediction results.

In still yet another aspect, the embodiments of the present disclosure provide a terminal device, the terminal device including a processor, a memory, and a transceiver.

The memory has stored therein a computer program, and the processor executes the computer program, to enable the terminal device to implement the above-mentioned processing method for measurement.

In still yet another aspect, the embodiments of the present disclosure provide a network device, the network device including a processor, a memory, and a transceiver.

The memory has stored therein a computer program, and the processor executes the computer program, to enable the network device to implement the above-mentioned processing method for measurement.

In still yet another aspect, the embodiments of the present disclosure further provide a computer-readable storage medium. The storage medium has stored therein a computer program, and the computer program is loaded and executed by a processor to implement the above-mentioned processing method for measurement.

In still yet another aspect, the present disclosure further provides a chip, which is used to be operated in a communication device, to enable the communication device to perform the above-mentioned processing method for measurement.

In still yet another aspect, the present disclosure provides a computer program product, which includes computer instructions stored in a computer-readable storage medium. A processor of a communication device reads the computer instructions from the computer-readable storage medium, and the processor executes the computer instructions, to enable the communication device to perform the above-mentioned processing method for measurement.

In still yet another aspect, the present disclosure provides a computer program, which is executed by a processor of a communication device to implement the above-mentioned processing method for measurement.

The embodiments of the present disclosure provide a resource configuration solution, in which a network device indicates that a terminal device is to perform measurement on spatial filters in one or more measurement sets through measurement indication information, so as to subsequently obtain prediction results of spatial filters corresponding to one or more prediction sets by prediction, thereby providing a measurement indication solution in a case of predicting the measurement results of the spatial filters, ensuring the flexibility of measurement in the case of predicting the measurement results of the spatial filters, and thereby improving the prediction effect of the spatial filters.

### BRIEF DESCRIPTION OF THE DRAWINGS

FIG. 1 is a schematic architecture diagram of a communication system provided by an embodiment of the present disclosure;
FIG. 2 is a structure diagram of neuron involved in the present disclosure;
FIG. 3 is a structure diagram of neural network involved in the present disclosure;
FIG. 4 is a diagram showing the relationship of input-output of a beam (pair) model;
FIG. 5 is a diagram showing the relationship of input-output of an optimal beam (pair) quality model;
FIG. 6 is a diagram showing an implementation of another model;
FIG. 7 is a flowchart of a processing method for measurement provided by an embodiment of the present disclosure;
FIG. 8 is a flowchart of a processing method for measurement provided by an embodiment of the present disclosure;
FIG. 9 is a flow chart of spatial domain mobility prediction on a UE-side model;
FIG. 10 is a schematic diagram of spatial domain mobility measurement and prediction;
FIG. 11 is diagram showing the relationship of input-output of a spatial domain mobility prediction model 1;
FIG. 12 is diagram showing the relationship of input-output of a spatial domain mobility prediction model 2;
FIG. 13 is diagram showing the relationship of input-output of a spatial domain mobility prediction model 3;
FIG. 14 is a flowchart of a processing method for measurement provided by an embodiment of the present disclosure;
FIG. 15 is a flow chart of spatial domain mobility prediction on an NW-side model;
FIG. 16 is a block diagram of a processing apparatus for measurement provided by an embodiment of the present disclosure;
FIG. 17 is a block diagram of a processing apparatus for measurement provided by an embodiment of the present disclosure; and
FIG. 18 is a schematic structure diagram of a communication device provided by an embodiment of the present disclosure.

### DETAILED DESCRIPTION

In order to make the objectives, technical solutions, and advantages of the present disclosure clearer, the implementations of the present disclosure are further described in detail below in conjunction with the accompanying drawings.

The network architecture and business scenarios described in embodiments of the present disclosure are intended to more clearly illustrate the technical solutions of the embodiments of the present disclosure, and do not constitute a limitation on the technical solutions provided by the embodiments of the present disclosure. A person skilled in the art will appreciate that, with the evolution of network architectures and the emergence of new business scenarios, the technical solutions provided by the embodiments of the present disclosure are also applicable to similar technical problems.

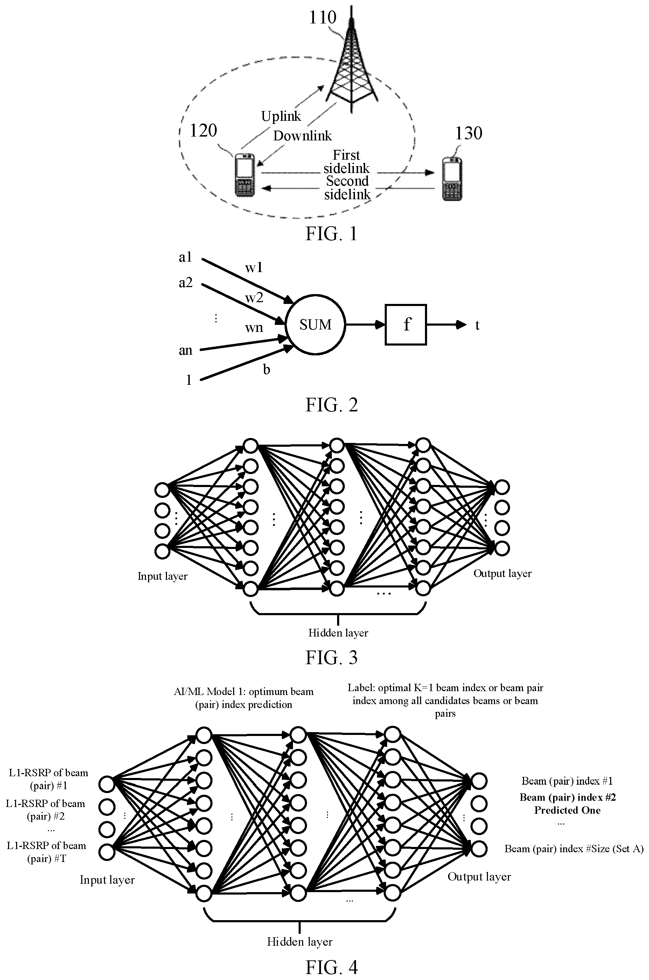

FIG. 1 shows a schematic diagram of a communication system involved in exemplary embodiments of the present disclosure. The communication system includes a network device 110 and a terminal device 120, and/or a terminal device 120 and a terminal device 130, which is not limited in the present disclosure.

The network device 110 in the present disclosure provides wireless communication functions. The network device 110 includes, but is not limited to: an evolved node B (eNB), a radio network controller (RNC), a node B (NB), a base station controller (BSC), a base transceiver station (BTS), a home base station (such as a home evolved node B or a home node B (HNB)), a baseband unit (BBU), or an access point (AP) a wireless relay node, a wireless backhaul node, a transmission point (TP) or a transmission and reception point (TRP) in a wireless fidelity (Wi-Fi) system. The network device 110 may also be a next generation node B (gNB) or a transmission point (TRP or TP) in a 5th generation (5G) mobile communication system, or may be one or a group of antenna panels (including multiple antenna panels) of a base station in a 5G system, or may be a network node constituting a gNB or a transmission point, such as a baseband unit (BBU) or a distributed unit (DU), or may be a base station in a beyond 5th generation (B5G) communication system or a 6th generation (6G) mobile communication system, or may be a core network (CN), fronthaul, backhaul, radio access network (RAN) or network slice, or may be a serving cell, a primary cell (PCell), a primary secondary cell (PSCell), a special cell (SpCell), a secondary cell (SCell) or a neighboring cell of a terminal device.

The terminal device 120 and/or the terminal device 130 in the present disclosure are also called a user equipment (UE), an access terminal, a user unit, a user station, a mobile station, a mobile platform, a remote station, a remote terminal, a mobile device, a user terminal, a terminal, a wireless communication device, a user agent, or a user device. The terminals include, but are not limited to, a handheld device, a wearable device, a vehicle-mounted device, and an Internet of Things device, such as a mobile phone, a tablet computer, an e-book reader, a laptop computer, a desktop computer, a television, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical, a wireless terminal in smart grids, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLAN), a personal digital assistant (PDA), a TV set-top box (STB), and a customer premise equipment (CPE).

The network device 110 and the terminal device 120 communicate with each other via some air interface technology, such as a Uu interface.

Exemplarily, there are two communication scenarios between the network device 110 and the terminal device 120: an uplink communication scenario and a downlink communication scenario, in which the uplink communication refers to transmitting signals to the network device 110, and the downlink communication refers to transmitting signals to the terminal device 120.

The terminal device 120 and the terminal device 130 communicate with each other via some air interface technology, such as a PC5 interface.

In some embodiments, there are two communication scenarios between the terminal device 120 and the terminal device 130: a first sidelink communication scenario and a second sidelink communication scenario, in which the first sidelink communication refers to transmitting signals to the terminal device 130, and the second sidelink communication refers to transmitting signals to the terminal device 120.

The terminal device 120 and the terminal device 130 are both within the network coverage and located in a same cell, or the terminal device 120 and the terminal device 130 are both within the network coverage but located in different cells, or the terminal device 120 is within the network coverage but the terminal device 130 is outside the network coverage.

The technical solutions provided in the embodiments of the present disclosure may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an NR system evolution system, an LTE-based access to unlicensed spectrum (LTE-U) system, an NR-based access to unlicensed spectrum (NR-U) system, a terrestrial networks (TN) system, a non-terrestrial networks (NTN) system, wireless local area network (WLAN), wireless fidelity (Wi-Fi), a cellular Internet of Things system, and a cellular passive Internet of Things system. The technical solutions may also be applied to subsequent evolution systems of a 5G NR system, as well as B5G, 6G and subsequent evolution systems. In some embodiments of the present disclosure, "NR" may also be referred to as a 5G NR system or a 5G system, in which 5G mobile communication systems may include non-standalone networking (NSA) and/or standalone networking (SA).

The technical solutions provided in the embodiments of the present disclosure may also be applied to machine type communication (MTC), long term evolution-machine communication technology (LTE-M), device-to-device (D2D) network, machine-to-machine (M2M) network, Internet of Things (IoT) network or other networks. Here, the Internet of Things network may include, for example, Internet of Vehicles. The communication methods in the Internet of Vehicles system are collectively referred to as vehicle-to-other devices (Vehicle to X (V2X), X can stand for anything). For example, V2X may include vehicle-to-vehicle (V2V) communication, vehicle-to-infrastructure (V2I) communication, vehicle-to-pedestrian (V2P) communication, or vehicle-to-network (V2N) communication.

### 1) Inter-Cell Beam Management of NR

In beam management of Rel. 17 (R17), according to capability reporting of UE, the network (NetWork, NW) will configure and/or activate beam management functions for non-serving cells for the UE, including beam measurement, beam reporting and beam indication.

The UE may measure non-serving cells other than the serving cell. The UE capability supports the measurement for the number of non-serving cells as 1, 2, 3 or 7. A non-serving cell has a physical cell identifier (PCI) different from that of the serving cell. The UE measures synchronization signal/physical broadcast channel blocks (SSBs) of the non-serving cell, so as to select a downlink beam (pair) with relatively good beam quality, and report the downlink beam (pair) to the NW.

In a single beam reporting, the UE can only report up to 4 downlink transmit beams from one non-serving cell, which includes a resource index corresponding to the beam (a channel state information reference signal resource indicator (CRI) or an SSB resource indicator (SSBRI)) and a link quality, such as a layer(level) 1 reference signal receiving power (L1-RSRP).

For a beam indication of a non-serving cell, the NW implements the beam indication through a unified transmission configuration indication (TCI) state. Specifically, the NW pre-configures reference signals from non-serving cells (via an additional PCI index) in the indicated unified TCI state. Once the downlink (DL)/joint TCI state is indicated to the UE, it means that the UE will use the DL/joint TCI state to receive a downlink beam from the non-serving cell.

### 2) Layer 1/Layer 2 Triggered Mobility of NR

In the L1/L2 triggered mobility management of Rel. 18 (R18), compared with the inter-cell beam management in R17, standardization has given a certain degree of enhancement in measurement and reporting. The UE may perform measurements in a serving cell and a target cell that are configured by the NW, and provide a maximum of M × L (depending on the UE capability) measurement results in a single report. Obviously, measurements of a large number of candidate cells require overhead of a large amount of reference signals and the delay required for the UE to measure these reference signals. After all, the UE often cannot measure multiple beams of multiple candidate cells simultaneously.

### 3) Neural Network (NN)

The neural network is a computational model consisting of multiple interconnected neuron nodes, where a connection between nodes represents a weighted value from input signals to output signals, called a weight; each node performs a weighted summation on different input signals and outputs the summation result through a specific activation function. A structure diagram of neuron involved in the present disclosure is shown in FIG. 2.

Deep neural network: a structure diagram of neural network involved in the present disclosure is shown in FIG. 3, which includes an input layer, a hidden layer, and an output layer. Through different connection methods, weights, and activation functions of multiple neurons, different outputs may be generated, thereby fitting the mapping relationship from input to output. Each upper-level node is connected to all of its lower-level nodes. This fully connected model herein can also be referred to as deep neural network (DNN), that is, deep neural network. The NN model may perform beam prediction in the spatial domain.

Model acquisition: an NN model may be trained and obtained through the process of constructing, training, validating, and testing dataset. The NN model involved in the present disclosure may have been trained in advance through offline training or online training. It will be noted that offline training and online training are not mutually exclusive. First, the NW may obtain a static training result by offline training of the dataset, which can be called offline training here. During the use of the NN by the NW or the UE, as the UE further measures and/or reports, the NN model may continue to collect more data and perform real-time online training to optimize parameters of the NN model to attain better inference and prediction results.

### 4) Artificial Intelligence (Al)/Machine Learning (ML)-based Beam Management Case

As one of the main cases of the R18 AI project, AI/ML-based beam management has attracted widespread attention from various companies and has undergone multiple rounds of case selection and simulation hypothesis discussions. Consensus was also reached on the preliminary implementation framework for AI/ML-based spatial domain and time domain beam prediction. Currently, two cases are defined: downlink beam prediction in the spatial domain and downlink beam prediction in the time domain. The definition of beam (pair) prediction in the spatial domain is as follows.

For AI/ML-based beam management, BM-Case1 and BM-Case2 are supported for characterization and baseline performance evaluations:
BM-Case 1: spatial domain DL beam prediction for Set A of beams based on measurement results of Set B of beams; and
BM-Case 2: temporal DL beam prediction for Set A of beams based on the historic measurement results of Set B of beams;
where details of BM-Case 1 and BM-Case 2 are to be determined; other sub-cases are to be determined;
note: for BM-Case1 and BM-Case2, Beams in Set A and Set B may be in a same frequency range.

Here, the beam prediction in the spatial domain (BM-Case1) is as follows.

The optimal downlink beam (pair) in Set A is predicted by measuring the beam (pair) in Set B. Set B may be a subset of Set A, which contains a part (sub set) of partial beams (pairs). Set A can be understood as the full set of beams (pairs). Set B and Set A may be two different beam sets, that is, Set B is a group of a small number of wide beams that can roughly cover the large number of narrow beams of Set A in space.

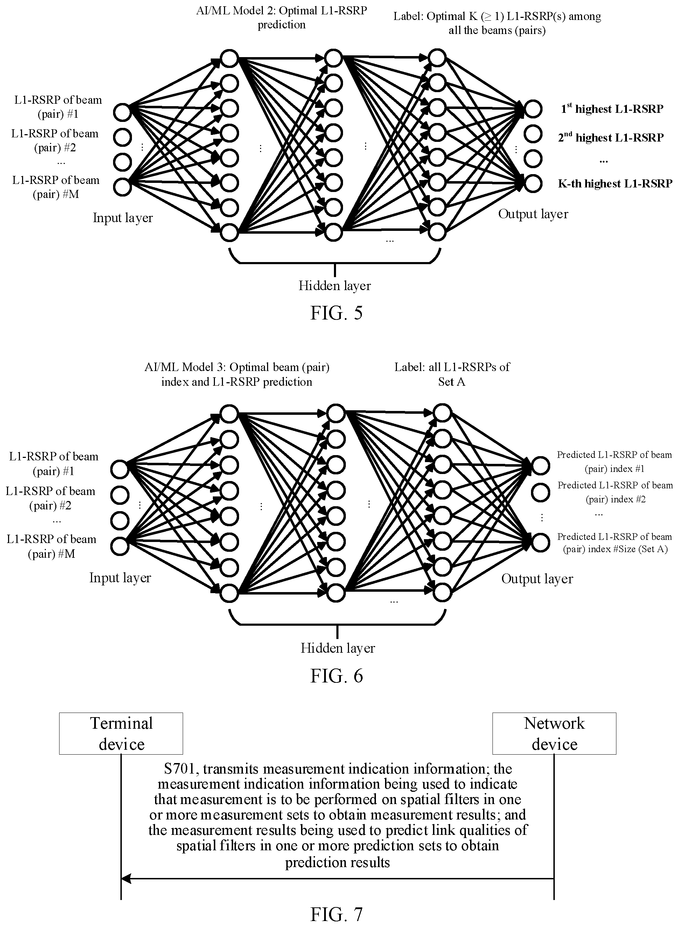

Model implementation: taking a diagram showing the relationship of input-output of a beam (pair) model shown in FIG. 4 and a diagram showing the relationship of input-output of an optimal beam (pair) quality model shown in FIG. 5 as examples, it can be understood that two different models use the same input (Set B) and have two different outputs, namely, one is the predicted Top-K beam (pair) index, and the other is the link quality of the Top-K beam (pair), i.e., an L1-RSRP. A diagram showing an implementation of another model may be shown in FIG. 6.

FIG. 4 shows a diagram showing the relationship of input-output of a beam (pair) index prediction model. It can be considered that this model solves a multi-classification problem. The model reflects the relationship between the L1-RSRP mapping of a subset (Set B as input) to the optimal K beam (pair) index(es). The output is the optimal K beam (pair) index(es) selected from the full set, that is, the K beam (pair) index(es) with the highest L1-RSRP. The label used by this model is the optimal (i.e., the highest L1-RSRP) beam(pair) index(es) measured in the full set.

FIG. 5 shows a schematic diagram of an optimal beam (pair) quality prediction model, which can be understood as a linear regression question, in which the relationship of input-output maps from the subset input L1-RSRP to the L1-RSRP of the optimal K beams (pairs). The input part is the same as that of the beam (pair) prediction model in FIG. 4, but the output of this model is K (K >= 1) optimal L1-RSRP(s). The labels are the optimal K L1-RSRP(s) and/or the corresponding K beam (pair) index(es) measured in the full set.

In FIG. 6, the output of this model is all the L1-RSRPs of the beams (pairs) of Set A. By sorting all predicted L1-RSRPs from high to low, the Top-K predicted L1-RSRP(s) may be selected. Then, according to output positions corresponding to the Top-K L1-RSRP(s), corresponding optimal K beam (pair) index(es) may be found. Therefore, in summary, this model can accomplish the functions of the two models in FIG. 4 and FIG. 5. But the disadvantage is that a larger dataset is required to support the training of this model.

It will be noted that the word "beam (pair)" means "beam" or "beam pair". Specifically, no matter uplink or downlink, the beam in the present disclosure may refer to a transmit beam or a receive beam, and the beam pair refers to a pair of a transmit beam and a receive beam.

In subsequent solutions of the present disclosure, "beam" may be described as a "spatial filter". Optionally, the meanings of "beam" and "spatial filter" below are the same, or the descriptions of "beam" and "spatial filter" can be interchangeable.

For the model involved in the present disclosure, its output can be understood as inference or prediction. In the present disclosure, inference and prediction have the same meaning and can be interchangeable.

Optionally, the Set B and Set A described above respectively represent a measurement set and a prediction set (e.g., a full set) for downlink beam (pair) prediction.

The current R18 NR standard already supports multi-cell beam management and layer 1/layer 2 triggered mobility management. Scanning a large number of spatial beams (pairs) in the downlink will bring a lot of reference signal overhead and measurement delay. For example, each candidate cell deploys 64 different downlink transmission directions in frequency range (FR) 2 (carried by up to 64 SSBs), and the UE uses multi-beam reception (assuming each antenna panel has 4 different receiving beams). Then the UE needs to measure at least 64*4 = 256 beam pairs, which corresponds to the downlink resource overhead of 256 resources. Considering that the total number of serving cells and candidate cells is at least 8, how to reduce the measurement overhead and corresponding delay of the UE is a question worth considering.

The present disclosure uses an AI/ML-based method, through training with a large amount of data, so that the model can infer the optimal candidate cell (including the current serving cell) and/or the optimal candidate beam (pair) of the cell, and/or the predicted link quality of the beam (pair), such as an L1-RSRP, with only a small amount of measurements. In this regard, the present disclosure proposes a solution in which a network device indicates that a terminal device is to measure a measurement set, so as to obtain a prediction result of a prediction set based on an AI/ML model.

The present disclosure may be applied to scenarios where a trained AI/ML model is used for mobility-related predictions, which may utilize limited spatial beam (pair) measurements to select the most suitable cell and the service beam (pair) within the cell from the global perspective (multiple candidate cells and all corresponding beams (pairs)). In the solution shown in the present disclosure, the model responsible for mobility prediction may be deployed on the UE-side or the NW-side.

Referring to FIG. 7, which shows a flowchart of a processing method for measurement provided by an embodiment of the present disclosure, the method may be performed interactively by a terminal device and a network device, where the terminal device may be the terminal device 120 or the terminal device 130 in the network architecture shown in FIG. 1, and the network device may be the network device 110 in the network architecture shown in FIG. 1. The method may include a step as follows.

In step 701 (S701), the network device transmits measurement indication information to the terminal device, and the terminal device receives the measurement indication information; the measurement indication information is used to indicate that the terminal device is to perform measurement on spatial filters in one or more measurement sets to obtain measurement results; and the measurement results are used to predict link qualities of spatial filters in one or more prediction sets to obtain prediction results.

For example, the above measurement results may be input into a prediction model to obtain the prediction results, output by the prediction model, of the link qualities of the spatial filters in the one or more prediction set.

To sum up, in the solution shown in the embodiments of the present disclosure, the network device indicates that the terminal device is to perform measurement on spatial filters in one or more measurement sets through measurement indication information, so as to subsequently obtain prediction results of spatial filters corresponding to one or more prediction sets through prediction, which provides a measurement indication solution in a case of predicting the measurement results of the spatial filters, ensuring the flexibility of measurement in the case of predicting the measurement results of the spatial filters, thereby improving the prediction effect of the spatial filters.

The solution shown in the above embodiments of the present disclosure may be implemented as a mobility prediction technology based on a spatial domain AI/ML model, in which measurement results of multiple cells serve as the input of the model, and the model on the UE-side or the NW-side predicts (outputs) the optimal cell and/or the optimal beam (pair) in the cell, and/or a link quality corresponding to the beam (pair). Based on this, the solution involved in the present disclosure may further include signaling supporting the input and output of the model, such as UE capability reporting, NW configuration and activation, reporting of the UE through periodic/semi-persistent/non-periodic/L1 or L2 mobility event, etc., thereby reducing the overhead and delay of downlink multi-cell beam (pair) measurement.

In some embodiments, if the model is deployed on the UE-side, that is, the process of predicting the link qualities of the spatial filters in the one or more prediction sets is performed by the UE, the UE reports to the NW whether the measurement and prediction of spatial domain mobility on the UE-side is supported.

In some embodiments, the NW configures and/or activates multi-cell measurement sets and prediction sets, i.e., Set Bₙ (1 ≤ n ≤ N) and Set Aₚ (1 ≤ p ≤ P), according to the capability of the UE to measure and predict the mobility, where each measurement set and each prediction set may correspond to one candidate cell, respectively.

In some embodiments, AI/ML performs mobility prediction for multiple cells including a current serving cell and multiple candidate cells.

In some embodiments, the UE may measure SSB resources and/or CSI-RS resources (including CSI-RS for mobility resources) of multiple cells.

In some embodiments, the output of the UE-side model is the optimal beam (pair) index in each optimal cell in the optimal L candidate cells and/or the link quality corresponding to each optimal beam (pair) index.

In some embodiments, the UE may perform conventional periodic/semi-persistent/non-periodic reporting, and may further perform reporting based on the L1/L2 mobility event.

In some embodiments, for reporting of mobility, the present disclosure provides a specific reporting format, which includes a PCI index or an index of Set A, a corresponding resource index CRI or SSBRI, and RSRP.

In some embodiments, the UE transmits a cell switch request to the NW, which includes an ID of a candidate cell, and a beam (pair) index corresponding to the candidate cell and/or a link quality corresponding to the beam (pair) index. The NW then transmits a confirmation of cell request information to the UE.

In some embodiments, the mobility prediction model may be deployed on the NW-side, that is, the above process of predicting the link qualities of the spatial filters in the one or more prediction sets is performed by the NW, and the UE completes the measurement of multi-cell measurement sets and reports the measurement results to the NW.

Regarding the embodiments described above, the subsequent embodiments of the present disclosure will be described in detail by taking the model deployed on the terminal device side or on the network device side as an example.

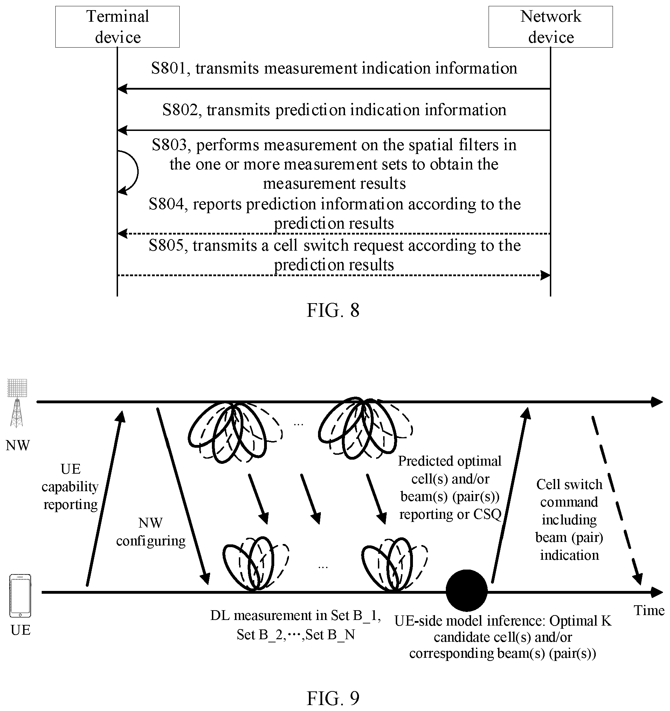

Based on the solution shown in FIG. 7 above, referring to FIG. 8, which shows a flowchart of a processing method for measurement provided by an embodiment of the present disclosure, the method may be performed interactively by a terminal device and a network device; where the terminal device and the network device may be the terminal device 120 and the network device 110 in the network architecture shown in FIG. 1, or the terminal device and the network device may be the terminal device 130 and the network device 110 in the network architecture shown in FIG. 1. In a case where the process of predicting the link qualities of the spatial filters in the one or more prediction sets is performed by the terminal device, for example, the prediction model is set in the terminal device, as shown in FIG. 8, the method may include steps as follows.

In step 801 (S801), the network device transmits measurement indication information to the terminal device, and the terminal device receives the measurement indication information.

Here, the measurement indication information is used to indicate that the terminal device is to perform measurement on spatial filters in one or more measurement sets to obtain measurement results; and the measurement results are used to predict link qualities of spatial filters in one or more prediction sets to obtain prediction results.

In some embodiments, the measurement indication information may be carried through radio resource control (RRC) signaling.

In some other embodiments, the measurement indication information may be carried through other signaling other than RRC, for example, through a media access control (MAC) control element (CE), or through a random access message transmitted by the network device to the terminal device.

In some embodiments, the measurement indication information is used to configure one or more measurement sets and/or to activate one or more measurement sets.

For example, the measurement indication information may configure the one or more measurement sets to the terminal device. Subsequently, the network device indicates, through additional signaling, that the terminal device is to perform measurement on the one or more measurement sets previously configured, or the terminal device determines whether to perform measurement on the one or more measurement sets by itself.

For another example, the terminal device is configured in advance with several/several groups of measurement sets. The measurement indication information may indicate that the terminal is to enable (activate) one or more measurement sets among the several/several groups of measurement sets, and the terminal device performs measurement on the one or more measurement sets. Optionally, the several/several groups of measurement sets may be pre-defined by a protocol, or configured in advance to the terminal device by the network device through other signaling.

For another example, the measurement indication information may configure one or more measurement sets to the terminal device, and simultaneously indicate that the network device is to start performing measurement on the one or more measurement sets (i.e., to activate the one or more measurement sets).

In some embodiments, the one or more prediction sets correspond to a current serving cell of the terminal device and one or more candidate cells of the terminal device, respectively.

In the above embodiments, the prediction sets may cover the current service cell of the terminal device and the one or more candidate cells of the terminal device, to enable the terminal device and/or the network device to obtain complete measurement/prediction results of the current service cell of the terminal device and the one or more candidate cells of the terminal device, to ensure that management processes such as cell switching are subsequently performed based on the measurement or prediction results.

For example, the one or more prediction sets may be a set consisting of all beams (spatial filters) corresponding to the current serving cell of the terminal device and the one or more candidate cells of the terminal device (compared to the one or more measurement sets, the one or more prediction sets may be a full set).

Optionally, in the one or more prediction sets, each prediction set may correspond to one cell, for example, the prediction set includes all beams corresponding to the cell. Alternatively, in the one or more prediction sets, each prediction set may correspond to some beams in one cell; or in the one or more prediction sets, each prediction set may correspond to all beams in multiple cells.

In some embodiments, the one or more measurement sets correspond to a current serving cell of the terminal device and one or more candidate cells of the terminal device, respectively.

In the above embodiments, the measurement set may cover the current service cell of the terminal device and the one or more candidate cells of the terminal device, to enable the prediction model to perform prediction through the measurement results of some beams of the current service cell of the terminal device and some beams of each cell in the one or more candidate cells of the terminal device, to ensure the accuracy of the prediction.

For example, the one or more prediction sets may be a set consisting of some beams (spatial filters) corresponding to the current serving cell of the terminal device and the one or more candidate cells of the terminal device (compared to the one or more measurement sets, the one or more prediction sets may be a subset thereof).

Optionally, in the one or more measurement sets, each measurement set may correspond to one cell, for example, the measurement set may include one beam/multiple partial beams corresponding to the cell. Alternatively, in the one or more measurement sets, each measurement set may correspond to one beam among some beams in one cell.

In some embodiments, the prediction results are used to indicate one or more of the following items:
an optimal cell among cells corresponding to the one or more prediction sets;
an optimal spatial filter or an optimal spatial filter pair in the optimal cell; or
a link quality of the optimal spatial filter or the optimal spatial filter pair.

Here, the optimal cell among the cells corresponding to the one or more prediction sets may refer to one or more cells with the highest prediction result (such as link quality) among the cells corresponding to the one or more prediction sets; where the prediction result of a cell may be the highest value among prediction results of a beam/beam pair corresponding to the cell; or the prediction result of a cell may be an average value of prediction results of a beam/beam pair corresponding to the cell.

In some embodiments, the prediction results include one or more of the following items:
identifiers of L optimal cells among the cells corresponding to the one or more prediction sets, L being an integer greater than or equal to 1;
an index of an optimal spatial filter or an index of an optimal spatial filter pair in the L optimal cells; or
a link quality corresponding to the index of the optimal spatial filter, or a link quality corresponding to the index of the optimal spatial filter pair.

In the above embodiments, the optimal cell among the cells corresponding to the one or more prediction sets may be indicated by the identifiers of the L optimal cells among the cells corresponding to the one or more prediction sets; where L may be a pre-defined value or a value indicated by the network device to the terminal device (e.g., through RRC signaling).

The optimal spatial filter/optimal spatial filter pair in the optimal cell may be indicated by the index of the optimal spatial filter/optimal spatial filter pair.

In some embodiments, an identifier of the optimal cell includes one or more of the following items:
a physical cell identifier (PCI) of the optimal cell; where each cell may correspond to one PCI, and the prediction model may output PCIs respectively corresponding to the L optimal cells;
a PCI index of the optimal cell; where PCIs of one or more cells may form a PCI set, which may be represented by an index (i.e., a PCI index), and the prediction model may output a PCI index of a set consisting of PCIs respectively corresponding to the L optimal cells, thereby reducing the number of bits of information contained in the identifier of the optimal cell in a case where the number of the optimal cells is greater than or equal to 2;
a configuration index of the optimal cell; or
an index of a prediction set to which the optimal cell belongs.

In some embodiments, the index of the optimal spatial filter or the index of the optimal spatial filter pair includes:
a channel state information reference signal (CSI-RS) resource indicator (CRI) of the optimal spatial filter or the optimal spatial filter pair; and/or
a synchronization signal block (SSB) resource indicator (SSB RI) of the optimal spatial filter or the optimal spatial filter pair.

In some embodiments, the link quality includes one or more of the following items:
a layer 1 reference signal receiving power (L1-RSRP), a layer 1 signal to interference plus noise ratio (L1-SINR), a layer 1 received signal strength indicator (L1-RSSI), a layer 1 reference signal received quality (L1-RSRQ), or a channel quality indicator (CQI).

In step 802 (S802), the network device transmits prediction indication information to the terminal device, and the terminal device receives the prediction indication information.

Here, the prediction indication information is used to configure one or more prediction sets and/or to activate one or more prediction sets.

For example, the prediction indication information may configure the one or more prediction sets for the terminal device. Subsequently, the network device indicates, through additional signaling, that the terminal device is to perform prediction on the one or more prediction sets previously configured, or the terminal device determines whether to perform prediction on the one or more prediction sets by itself.

For another example, the terminal device is configured in advance with several/several groups of prediction sets. The prediction indication information may indicate that the terminal is to enable (activate) one or more prediction sets among the several/several groups of prediction sets, and the terminal device performs prediction on the one or more prediction sets. Optionally, the several/several groups of prediction sets may be pre-defined by a protocol, or configured in advance to the terminal device by the network device through other signaling.

For another example, the prediction indication information may configure one or more prediction sets for the terminal device, and simultaneously indicate that the network device is to start performing prediction on the one or more prediction sets (i.e., to activate the one or more prediction sets).

In some embodiments, the prediction indication information may be carried through RRC signaling.

In some other embodiments, the prediction indication information may also be carried through other signaling other than RRC, for example, carried through MAC CE, or carried through a random access message transmitted by the network device to the terminal device.

In some embodiments, the measurement indication information and the prediction indication information may be carried by the same signaling, or the measurement indication information and the prediction indication information may be carried by different signaling.

In some embodiments, the method further includes:
reporting, by the terminal device, capability information of the terminal device to the network device; and receiving, by the network device, the capability information of the terminal device reported by the terminal device; where the capability information is used to indicate capability of the terminal device to measure and/or predict spatial domain mobility; and the capability information of the terminal device is used by the network device to determine the one or more measurement sets and/or the one or more prediction sets.

In the above embodiments, the one or more measurement sets and/or the one or more prediction sets, may be determined by the capability information of the terminal device, and the network device may determine which measurement set(s) and prediction set(s) to be configured or activated for the terminal through the capability information reported by the terminal.

In some embodiments, the capability information includes at least one of the following pieces of information:
whether the terminal device supports measurement and/or prediction on the spatial domain mobility;
in response that the terminal device supports measurement on the spatial domain mobility, a maximum number of candidate cells that the terminal device supports for measurement on all downlink component carriers (CCs)/bandwidth parts (BWPs);
in response that the terminal device supports prediction on the spatial domain mobility, a maximum number of candidate cells that the terminal device supports for prediction on all downlink CCs/BWPs;
in response that the terminal device supports measurement on the spatial domain mobility, a maximum number of measurement sets that the terminal device supports for measurement on one downlink CC/BWP; each measurement set corresponding to one cell; or
in response that the terminal device supports prediction on the spatial domain mobility, a maximum number of prediction sets that the terminal device supports for prediction on all downlink CCs/BWPs; each prediction set corresponding to one cell.

In step 803 (S803), the terminal device performs measurement on the spatial filters in the one or more measurement sets to obtain the measurement results.

Here, in the process of accessing the service cell and performing communication, the terminal device may regularly/irregularly perform measurement the spatial filters in the one or more measurement sets.

In some embodiments, each measurement set in the one or more measurement sets corresponds to one cell, and the measurement results of the spatial filters in the one or more measurement sets include:
measurement results of downlink reference signal resources of cells corresponding to the one or more measurement sets on the spatial filters in the one or more measurement sets.

In some embodiments, the downlink reference signal resources include SSB resources and/or CSI-RS resources.

In step 804 (S804), the terminal device reports prediction information to the network device according to the prediction results; and the network device receives the prediction information reported by the terminal device according to the prediction results.

In the solution shown in the embodiments of the present disclosure, after obtaining the measurement results of the spatial filters in the one or more measurement sets, the terminal device may input part or all of the measurement results of the spatial filters in the one or more measurement sets into the prediction model to obtain the prediction results of the one or more prediction sets output by the prediction model.

After obtaining the prediction results of the one or more prediction sets, the terminal device may report prediction information to the network device according to the prediction results; where the prediction information may include all of information in the prediction results, or the prediction information may include part of the information in the prediction results.

For example, the terminal device may determine the prediction information to be reported according to the relationship between a prediction result corresponding to the service cell and prediction results of other cells among the prediction results; or the prediction information may be determined by the relationship between a prediction result corresponding to the service cell and a prediction result of the candidate cell.

For example, if a prediction result corresponding to the service cell is the optimal one among the prediction results of the one or more prediction sets, the prediction information reported by the terminal device may include the prediction result of the current service cell; and if a prediction result corresponding to the service cell is not the optimal one among the prediction results of the one or more prediction sets, the prediction information reported by the terminal device may include the prediction result of the current service cell, as well as prediction results of one or more candidate cells that are superior than that of the service cell.

In some embodiments, reporting, by the terminal device, the prediction information to the network device according to the prediction results, includes:
reporting the prediction information to the network device in a periodic manner; or
reporting the prediction information to the network device in a semi-persistent manner; or
reporting the prediction information to the network device in a non-periodic manner.

Accordingly, receiving, by the network device, the prediction information reported by the terminal device according to the prediction results, includes:
receiving the prediction information reported, in a periodic manner, by the terminal device; or
receiving the prediction information reported, in a semi-persistent manner, by the terminal device; or
receiving the prediction information reported, in a non-periodic manner, by the terminal device.

In the embodiments of the present disclosure, the terminal device may report the prediction information to the network device according to a pre-configured periodic/semi-persistent/non-periodic reporting timing/reporting strategy.

In some embodiments, reporting, by the terminal device, the prediction information to the network device according to the prediction results, includes:
reporting the prediction information to the network device according to an L1/L2 mobility event.

Accordingly, receiving, by the network device, the prediction information reported by the terminal device according to the prediction results, includes:
receiving the prediction information reported by the terminal device according to the L1/L2 mobility event.

In the embodiments of the present disclosure, the prediction information may also be reported by the terminal device triggered by the L1/L2 mobility event. For example, in a case where the L1/L2 mobility event indicates that the terminal device may have a need for cell switching, the prediction information is reported.

In some embodiments, the L1/L2 mobility event includes at least one of the following events that:
predicted link performance of a current serving cell is superior or inferior than a first threshold;
the predicted link performance of the current serving cell is superior or inferior than predicted link performance of a candidate cell plus a first offset;
the predicted link performance of the candidate cell is superior or inferior than a second threshold; or
the predicted link performance of the current serving cell is inferior than a point threshold, and the predicted link performance of the candidate cell is superior than a fourth threshold.

In the embodiments of the present disclosure, in a case where the link performance/link quality of the serving cell is relatively low, and/or the link performance/link quality of the candidate cell is relatively high, it may be determined that the terminal device may have a need for cell switching. In this case, the terminal device may report the prediction information.

After the terminal device reports the prediction information, the network device may determine whether to transmit an indication of cell switching to the terminal device according to the prediction information.

In step 805 (S805), the terminal device transmits a cell switch request to the network device according to the prediction results, and the network device receives the cell switch request transmitted by the terminal device according to the prediction results.

In this step, the terminal device may also actively initiate the cell switch request according to the prediction results.

In some embodiments, the cell switch request includes the prediction results.

Optionally, the cell switch request may include all of information of the prediction results, or may include part of the information of the prediction results.

In a case where the cell switch request includes part of the information in the prediction results, a method for determining the part of the information in the prediction results may refer to the method for determining the prediction information described above.

Here, the above step 804 and step 805 may be used either one; or the above step 804 and step 805 may be used simultaneously.

### Embodiment 1: Mobility Inference (UE-Side Model)

This embodiment deploys an AI/ML model on the UE-side, so that the UE uses the measurement results of the downlink reference signals as input to the model for inference.

Referring to FIG. 9, which shows a flow chart of spatial domain mobility prediction on a UE-side model, as shown in FIG. 9, there is an overall process in which the UE-side AI/ML model infers the optimal candidate cell and/or the optimal beam (pair) in the cell and/or the performance of the beam (pair), where the solid ellipse represents a beam (pair) in Set Bₙ that the UE actually measured; the dotted ellipse represents a beam (pair) that the UE did not measure but is included in the prediction set. The optimal step of the process, namely CSC, is represented by a dotted line because the optimal cell predicted by the model may be the current serving cell, so there is no need to perform cell switching.

It will be noted that for Set B input to the model, Set B itself may be a measurement set of a candidate cell. Set B may also be generated from a measurement set Set C of a candidate cell. That is, Set B is top-M beams (pairs) measured in Set C and L1-RSRPs thereof.

### 1) UE capability reporting

Before the NW configures measurement resources and prediction sets required by the model for the UE, the UE needs to inform the NW through capability reporting whether the UE supports the measurement and prediction of the spatial domain mobility of the UE-side model. If this mobility is supported, the capabilities reported by the UE include, but are not limited to:
the maximum number of candidate cells supported for measurement on all downlink CCs/BWPs: for example, the maximum number of measurement sets that are configurable (generally, each measurement set corresponds to one candidate cell); and the maximum number of measurement sets that the UE can perform measurement simultaneously;
the maximum number of candidate cells supported for prediction on all downlink CCs/BWPs: for example, the maximum number of prediction sets that can be configured (generally, each prediction set corresponds to one candidate cell);
the maximum number of candidate cell measurement sets supported on one downlink CC/BWP: for example, in each measurement set Set Bₙ (1 ≤ n ≤ N), the maximum number of downlink SSB resources and/or CSI-RS resources that can be measured, including CSI-RS for mobility resources; and
the maximum number of candidate cell prediction sets supported on one downlink CC/BWP: for example, in each prediction set Set Aₚ (1 ≤ p ≤ P), the maximum number of downlink beams (pairs), that is, the number of SSBRIs and/or CRIs, can be predicted.

### 2) Network Configuration

The NW configures and/or activates the candidate cell measurement set Set Bₙ (1 ≤ n ≤ N) required for model input for the UE.

The NW uses RRC signaling to configure one or more groups of Set Bₙ (1 ≤ n ≤ N) for the UE. For example, multiple groups of Set Bₙ (1 ≤ n ≤ N) may be expressed as {Set B_{1X}, Set B_{2X}, ..., Set B_{NX}}, ..., {Set B_{1Z}, Set B_{2Z}, ..., Set B_{NZ}}; for another example, Set Bₙ as a downlink beam (pair) measurement set may include CSI-RS resources (including CSI-RS for mobility resources) and/or SSB resources.

If the NW configures multiple groups of Set Bₙ (1 ≤ n ≤ N) for the UE, the NW further needs to use MAC CE signaling to activate one group of Set Bₙ (1 ≤ n ≤ N) among the multiple configurations according to the actual deployment and antenna configuration. Otherwise, the UE uses only a configured group of Set Bₙ (1 ≤ n ≤ N), for example, {Set B_{1X}, Set B_{2X}, ..., Set B_{NX}}. It will be noted that each Set Bₙ (1 ≤ n ≤ N) may have a different number N therein, such as N = 4 or 8.

The NW configures and/or activates the downlink beam (pair) prediction set Set Aₚ (1 ≤ p ≤ P) output by the model for the UE.

The NW uses RRC signaling to configure one or more groups of beam (pair) prediction sets Set Aₚ (1 ≤ p ≤ P) for the UE. For example, multiple groups of Set Aₚ (1 ≤ p ≤ P) may be expressed as {Set A_{1X}, Set A_{2X}, ..., Set A_{PX}}, ..., {Set A_{1Z}, Set A_{2Z}, ..., Set A_{PZ}}. For another example, Set Aₚ as a beam (pair) prediction set may include CSI-RS resources (including CSI-RS for mobility resources) and/or SSB resources.

If the NW is configured with multiple groups Set Aₚ (1 ≤ p ≤ P), the NW further needs to use MAC CE signaling to activate one group Set Aₚ (1 ≤ p ≤ P) among the multiple configurations according to the actual deployment and antenna configuration. Otherwise, only a configured group of Set Aₚ (1 ≤ p ≤ P) is used, such as {Set A_{1X}, Set A_{2X}, ..., Set A_{PX}}. Likewise, the maximum P value for different groups may be different, such as P = 2 or 4.

### 3) Measurement of mobility measurement set by UE

To find the optimal serving cell and/or the optimal downlink beam (pair) in the cell, the UE measures SSB and/or CSI-RS resources of N cells through layer 1, corresponding to one group of Set Bₙ (1 ≤ n ≤ N). The N cells include one current serving cell (such as SpCell) and (N-1) candidate cells.

It will be noted that the total number of cells (assuming it is M) is not necessarily equal to the number of measurement sets N. For example, in a case where M = 16 and N = 8, the UE measures only 8 of the cells, but can infer the most suitable cell and/or the optimal beam (pair) corresponding to the cell from the 16 cells (including one serving cell of SpCell and 15 candidate cells).

In addition, it will be noted that for beam-level mobility, the evaluation of model prediction is performed according to the output of the optimal beam (pair) index. However, the present disclosure focuses on cell-level mobility. For example, a single optimal beam in a cell (other beams are of poor quality) does not guarantee that the cell is the optimal cell for the UE. A common method for identifying the optimal cell is to average the link qualities (such as L1-RSRPs) of multiple beams within the cell to obtain the optimal cell (ranked from high to low by an average L1-RSRP). In the present disclosure, the model used to predict the optimal cell also refers to the optimal cell selection mechanism, namely cell-level mobility.

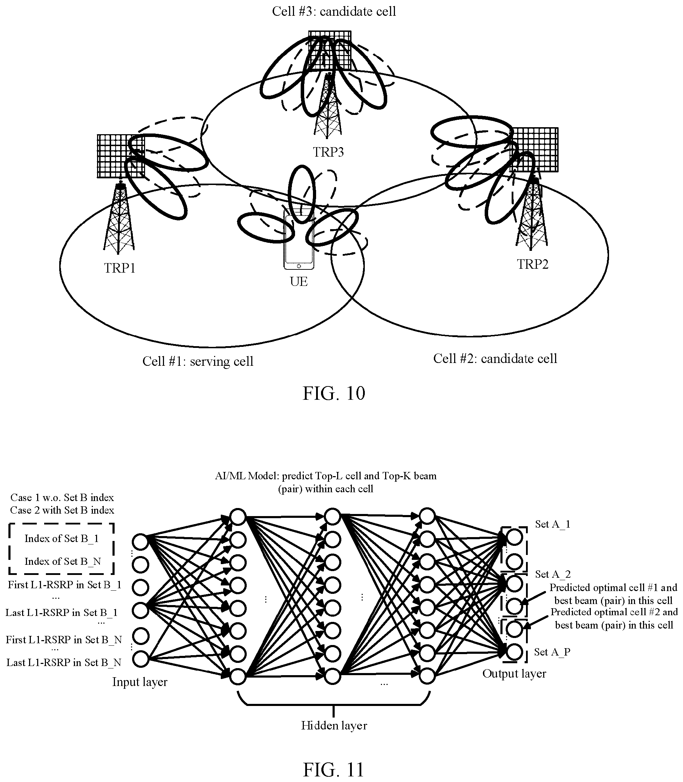

Considering the beam (pair) prediction in the spatial domain (BM-Case1), for example, beams (pairs) included in Set Bₙ are only a subset of downlink beams (pairs) in a corresponding cell. For example, in a schematic diagram of spatial domain mobility measurement and prediction shown in FIG. 10, the UE measures downlink reference signals in Set B₁ in serving cell #1; and measures downlink reference signals in Set B₂ and Set B₃ in candidate cells #2 and #3. The reference signals actually measured by the UE are represented by solid ellipses, and the reference signals not measured but in the prediction set are represented by dotted ellipses.

### 4) Input and output of model

There are two main methods for the input of the UE-side model:

The first method is to input the link qualities of the reference signals of Set Bₙ (1 ≤ n ≤ N) in a fixed order only. The UE uses measurement results in all Set Bₙ as input to the model in a fixed order, as shown in Case 1 in a diagram showing the relationship of input-output of a spatial domain mobility prediction model 1 shown in FIG. 11.

The second method is that the input of the model includes the index of the measurement set n in Set Bₙ and the link qualities contained therein. The advantage is that different Set Bₙ combinations may be flexibly selected as the input of the model, as shown in Case 2 in FIG. 11.

The link quality is generally an L1-RSRP, and may also be an L1-SINR, an L1-RSSI, an L1-RSRQ, or a CQI.

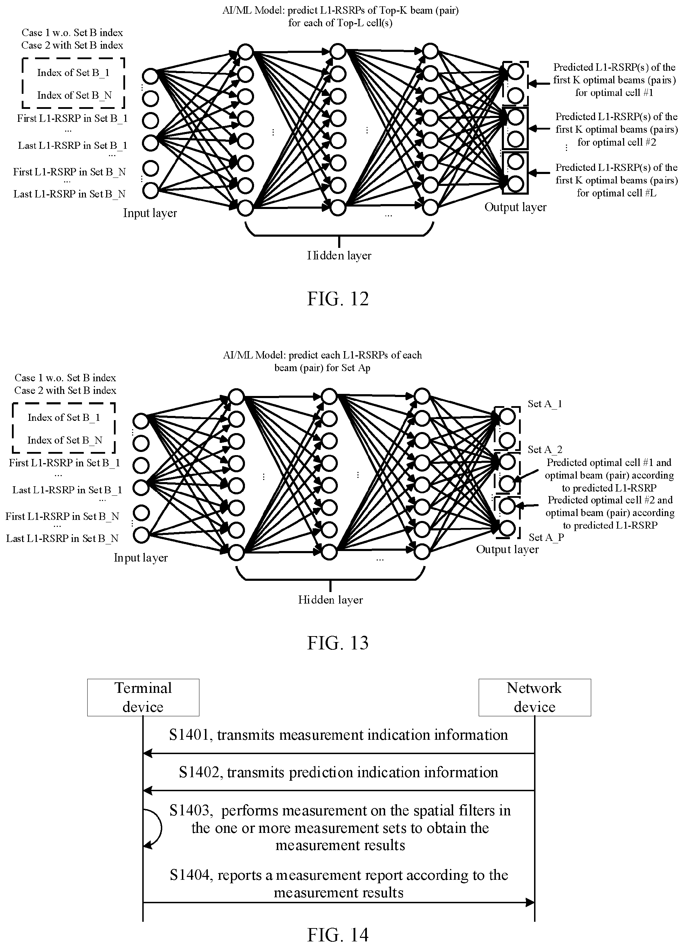

There are also two main methods for the output of the UE-side model:
The first method is the prediction of two independent models. The first model (as shown in FIG. 11) predicts an index of the optimal candidate cell and/or the optimal beam (pair) index in the selected cell, and the second model (as shown in a diagram showing the relationship of input-output of a spatial domain mobility prediction model 2 in FIG. 12) predicts a link quality of the optimal beam (pair) corresponding to the optimal cell, such as an L1-RSRP.

The second method is to use one model to complete all prediction tasks, as shown in a diagram showing the relationship of input-output of a spatial domain mobility prediction model 3 in FIG. 13. This model predicts all L1-RSRPs for each set in Set Aₚ (1 ≤ p ≤ P). Then, the top-L candidate cells (including the original serving cell) and the top-K beams (pairs) within each candidate cell may be selected according to the descending order of the L1-RSRPs, followed by the corresponding predicted L1-RSRP values. Note: the K value for each candidate cell may be different.

Regardless of the implementation method of the model, the final output is in Set Aₚ (1 ≤ p ≤ P):
the optimal L candidate cells (which may include the current serving cell); and/or
the optimal beam (pair) index in each optimal cell; and/or (only for FR2, with a relatively higher frequency band); and/or
a link quality corresponding to each optimal beam (pair) index, such as an L1-RSRP.

### 5) Reporting of the optimal candidate cell and/or optimal beam (pair) and/or link quality

For the time domain characteristics of mobility prediction reporting, there may be two mechanisms classified as follows:
① Periodic/semi-persistent/non-periodic reporting: the UE periodically or semi-persistently reports the predicted results of the mobility model according to the reporting period and offset configured by the NW. The semi-persistent reporting requires the NW to have a corresponding activation action for measurement and reporting after configuration. For the non-periodic reporting, the NW transmits a DCI to trigger the corresponding measurement and reporting of the UE.
② Reporting based on mobility event, defining a layer 1/layer 2 mobility event based on prediction, as follows that:
   A) the predicted link performance of the current serving cell is superior or inferior than a specific threshold;
   B) the predicted link performance of the current serving cell is superior or inferior than that of a candidate cell plus an offset;
   C) the predicted link performance of a candidate cell is superior or inferior than a specific threshold; or
   D) the predicted link performance of the current serving cell is inferior than that of a specific threshold, and the predicted link performance of a candidate cell is superior than a specific threshold.

The UE compares the mobility events defined above with the prediction results of the model, determines whether a layer 1/layer 2 mobility event occurs, and autonomously chooses whether to perform mobility-related reporting. For example, in a case where the optimal cell output by the model is still the current serving cell of the UE, the UE does not need to perform reporting and does not need to trigger subsequent mobility operations. In a case where the optimal cell output by the model is a candidate cell and the performance of the candidate cell is superior than that of the current serving cell by an offset (such as 6 dB), the UE may determine that Event B has occurred and trigger non-periodic reporting based on the UE request (for example, which may be carried by uplink control information (UCI)). The process is as follows:
in S1, the output of the UE-side model triggers a mobility event (for example, the link quality of the candidate cell is sufficiently superior than that of the current serving cell, e.g., greater by a certain offset, such as an L1-RSRP of 6 dB);
in S2, the UE requests resources for mobility reporting;
in S3, the NW agrees to the reporting request of the UE and transmits uplink scheduling DCI; and
in S4, the UE uses PUSCH scheduled by the NW to carry the mobility-related reporting.

For the content of mobility prediction reporting, there may be two mechanisms classified as follows:
For the model prediction result, that is, the optimal candidate cell index selected from Set Aₚ, 1 ≤ p ≤ P, and/or the optimal beam (pair) index of the optimal cell, and/or the link quality (e.g., an L1-RSRP) corresponding to the optimal beam (pair) index, the UE reports the prediction result of the model to the NW in a single beam reporting instance.

For the optimal candidate cell, the UE may need to report the index of the cell. For example, the index may be PCI, a PCI index, a configuration index of a candidate cell, or an index of Set Aₚ corresponding to the cell, that is, p value; for the index of the beam (pair) within the candidate cell, the existing resource index in the NR system, such as SSBRI or CRI, may be used; for the link quality, the present disclosure takes the L1-RSRP as an example, and does not exclude other indicators of the link quality, such as an L1-SINR or a CQI.

It will be noted that there is currently no PCI reporting in NR technology. Because the NW is configured through RRC, the optimal beams reported by the UE all come from the same cell, that is, the same PCI. In addition, since the PCI parameter has the potential risk of exposing the NW-side base station configuration, the present disclosure also considers a PCI index, that is, simply encoding multiple PCIs. For example, 8 10-bit real PCIs may be encoded into a 3-bit PCI index. In addition, in mobility enhancement, multiple candidate cells need to be configured in advance through RRC parameters, so the configuration index of the candidate cell may also serve as an identifier or index of a cell.

In order to carry the mobility-related prediction reporting, the beam reporting format in the existing technology needs to be revised, as shown in Table 1, where for the index of the predicted optimal candidate cell, its PCI, PCI index, the configuration index of the candidate cell or the corresponding Set A index (if any) may be reported. For the predicted beam (pair), if a downlink transmit beam is to be predicted, it may be represented by the conventional CRI or SSBRI. If a downlink transmit/receive beam pair is to be predicted, it may be referred to as a beam (pair).

**Table 1**

| CSI report number | CSI fields |
|---|---|
| CSI report #n | PCI or PCI index or configuration index of candidate cell or Set A index #1, if reported |
| | PCI or PCI index or configuration index of candidate cell or Set A index #2, if reported |
| | ... |
| | PCI or PCI index or configuration index of candidate cell or Set A index #L, if reported |
| | CRI or SSBRI or beam (pair) index #1 for cell #1, if reported |
| | CRI or SSBRI or beam (pair) index #2 for cell #1, if reported |
| | ... |
| | CRI or SSBRI or beam (pair) index #K for cell #1, if reported |
| | ... |
| | CRI or SSBRI or beam (pair) index #1 for cell #L, if reported |
| | CRI or SSBRI or beam (pair) index #2 for cell #L, if reported |
| | ... |
| | CRI or SSBRI or beam (pair) index #K for cell #L, if reported |
| | RSRP #1 for cell #1, if reported |
| | Differential RSRP #2 for cell #1, if reported |
| | ... |
| | Differential RSRP #K for cell #1, if reported |
| | ... |
| | RSRP #1 for cell #L, if reported |
| | Differential RSRP #2 for cell #L, if reported |
| | ... |
| | Differential RSRP #K for cell #L, if reported |

### 6) Cell Switch Command (CSC) or Cell Switch Request (CSQ)

In the Rel-18 NR standard, the NW is supported to use a cell switch command based on the unified TCI state (carried by MAC CE). The unified TCI state is a DL/joint TCI state, including a PCI index or a candidate cell configuration index, which may indicate a candidate cell index to which the UE switches.

In addition to the above CSC from the NW, the UE may not report all the output results of the model, but may transmit a cell switch suggestion to the NW, which is also carried by MAC CE and should include at least the following:
an ID of a candidate cell, such as PCI, PCI index, a candidate cell configuration index or an index p of Set A; and/or
a beam (pair) index corresponding to the candidate cell, such as CRI/SSBRI or beam (pair) index; and/or
a link quality corresponding to the beam (pair) index, such as an L1-RSRP.

After receiving the switch request transmitted by the UE, the NW transmits a confirmation command to the UE, and the UE may complete subsequent mobility operations.

Based on the solution shown in FIG. 7 above, referring to FIG. 14, which shows a flowchart of a processing method for measurement provided by an embodiment of the present disclosure, the method may be performed interactively by a terminal device and a network device; where the terminal device and the network device may be the terminal device 120 and the network device 110 in the network architecture shown in FIG. 1, or the terminal device and the network device may be the terminal device 130 and the network device 110 in the network architecture shown in FIG. 1. In a case where the process of predicting the link qualities of the spatial filters in the one or more prediction sets is performed by the network device, for example, the prediction model is set in the network device, as shown in FIG. 14, the method may include steps as follows.

In step 1401 (S1401), the network device transmits measurement indication information to the terminal device, and the terminal device receives the measurement indication information.

Here, the measurement indication information is used to indicate that the terminal device is to perform measurement on spatial filters in one or more measurement sets to obtain measurement results; and the measurement results are used to predict link qualities of spatial filters in one or more prediction sets to obtain prediction results.

In some embodiments, the measurement indication information is used to configure one or more measurement sets and/or to activate one or more measurement sets.

In some embodiments, the one or more prediction sets correspond to a current serving cell of the terminal device and one or more candidate cells of the terminal device, respectively.

In some embodiments, the one or more measurement sets correspond to a current serving cell of the terminal device and one or more candidate cells of the terminal device, respectively.

In some embodiments, the prediction results are used to indicate one or more of the following items:
an optimal cell among cells corresponding to the one or more prediction sets;
an optimal spatial filter or an optimal spatial filter pair in the optimal cell; or
a link quality of the optimal spatial filter or the optimal spatial filter pair.

In some embodiments, the prediction results include one or more of the following items:
identifiers of L optimal cells among the cells corresponding to the one or more prediction sets, L being an integer greater than or equal to 1;
an index of an optimal spatial filter or an index of an optimal spatial filter pair in the L optimal cells; or
a link quality corresponding to the index of the optimal spatial filter, or a link quality corresponding to the index of the optimal spatial filter pair.

In some embodiments, an identifier of the optimal cell includes one or more of the following items:
a physical cell identifier (PCI) of the optimal cell; where each cell may correspond to one PCI, and the prediction model may output PCIs respectively corresponding to the L optimal cells;
a PCI index of the optimal cell; where PCIs of one or more cells may form a PCI set, which may be represented by an index (i.e., a PCI index), and the prediction model may output a PCI index of a set consisting of PCIs respectively corresponding to the L optimal cells, thereby reducing the number of bits of information contained in the identifier of the optimal cell in a case where the number of the optimal cells is greater than or equal to 2;
a configuration index of the optimal cell; or
an index of a prediction set to which the optimal cell belongs.

In some embodiments, the index of the optimal spatial filter or the index of the optimal spatial filter pair includes:
a channel state information reference signal (CSI-RS) resource indicator (CRI) of the optimal spatial filter or the optimal spatial filter pair; and/or
a synchronization signal block (SSB) resource indicator (SSB RI) of the optimal spatial filter or the optimal spatial filter pair.

In some embodiments, the link quality includes one or more of the following items:
a layer 1 reference signal receiving power (L1-RSRP), a layer 1 signal to interference plus noise ratio (L1-SINR), a layer 1 received signal strength indicator (L1-RSSI), a layer 1 reference signal received quality (L1-RSRQ), or a channel quality indicator (CQI).

In step 1402 (S1402), the network device transmits prediction indication information to the terminal device, and the terminal device receives the prediction indication information.

Here, the prediction indication information is used to configure one or more prediction sets and/or to activate one or more prediction sets.

In some embodiments, the method further includes:
reporting, by the terminal device, capability information of the terminal device to the network device; and receiving, by the network device, the capability information of the terminal device reported by the terminal device; where the capability information is used to indicate capability of the terminal device to measure and/or predict spatial domain mobility; and the capability information of the terminal device is used by the network device to determine the one or more measurement sets and/or the one or more prediction sets.

In some embodiments, the capability information includes at least one of the following pieces of information:
whether the terminal device supports measurement and/or prediction on the spatial domain mobility;
in response that the terminal device supports measurement on the spatial domain mobility, a maximum number of candidate cells that the terminal device supports for measurement on all downlink CCs/BWPs;
in response that the terminal device supports prediction on the spatial domain mobility, a maximum number of candidate cells that the terminal device supports for prediction on all downlink CCs/BWPs;
in response that the terminal device supports measurement on the spatial domain mobility, a maximum number of measurement sets that the terminal device supports for measurement on one downlink CC/BWP; each measurement set corresponding to one cell; or
in response that the terminal device supports prediction on the spatial domain mobility, a maximum number of prediction sets that the terminal device supports for prediction on all downlink CCs/BWPs; each prediction set corresponding to one cell.

In step 1403 (S1403), the terminal device performs measurement on the spatial filters in the one or more measurement sets to obtain the measurement results.

In some embodiments, each measurement set in the one or more measurement sets corresponds to one cell, and the measurement results of the spatial filters in the one or more measurement sets include:
measurement results of downlink reference signal resources of cells corresponding to the one or more measurement sets on the spatial filters in the one or more measurement sets.

In some embodiments, the downlink reference signal resources include SSB resources and/or CSI-RS resources.

The above 1401 to step1403 may refer to step 801 to step 803 in the embodiments shown in FIG. 8.

In step 1404 (S1404), the terminal device reports a measurement report to the network device according to the measurement results; and accordingly, the network device receives the measurement report reported by the terminal device according to the measurement results.

In some embodiments, the measurement report includes: link qualities of resource indexes respectively corresponding to the one or more measurement sets.

Here, the link qualities of the resource indexes respectively corresponding to the one or more measurement sets are arranged according to an arrangement order of the one or more measurement sets and an arrangement order of resource indexes corresponding to each measurement set.

In the embodiments of the present disclosure, a reporting format is designed that: the UE reports the measurement results of Set Bₙ (1 ≤ n ≤ N) in a pre-set order. For example, the reporting is performed in an ascending order according to the indexes n of Set Bₙ, so the indexes of Set Bₙ can be omitted; within each measurement set Set Bₙ, the reporting may be performed in an ascending order according to the resource indexes (i.e., SSBRI or CRI), so the resource indexes in Set Bₙ can be omitted. Finally, in this reporting format, only the measured link quality, such as an L1-RSRP, needs to be reported. A specific format may be referred to Table 2, in which the absolute value of RSRP is reported, and no differential RSRP is reported.

**Table 2**

| CSI report number | CSI fields |
|---|---|
| CSI report #n | RSRP #1 (of PCI #1 or Set B index #1) |
| | RSRP #2 (of PCI #1 or Set B index #1) |
| | ... |
| | RSRP #M (of PCI #1 or Set B index #1) |
| | ... |
| | RSRP #1 (of PCI #N or Set B index #N) |
| | RSRP #2 (of PCI #N or Set B index #N) |
| | ... |
| | RSRP #M (of PCI #N or Set B index #N) |

In some embodiments, the measurement report includes:
differences between link qualities of resource indexes respectively corresponding to the one or more measurement sets and a reference link quality;

Here, the differences between the link qualities of the resource indexes respectively corresponding to the one or more measurement sets and the reference link quality are arranged according to an arrangement order of the one or more measurement sets and an arrangement order of resource indexes corresponding to each measurement set.

In the embodiments of the present disclosure, the network device may also report differences between link qualities of resource indexes respectively corresponding to the one or more measurement sets and a reference link quality in a difference manner. Moreover, differences between the resource indexes respectively corresponding to the one or more measurement sets are also arranged in a certain order.

Here, the reference link quality may be one or more of the link qualities of the resource indexes respectively corresponding to the one or more measurement sets, or may be an additionally set reference value.

In some embodiments, the measurement report includes:
a first reference link quality, the first reference link quality being a link quality of a first resource index corresponding to a first measurement set; where the first measurement set is one of the one or more measurement sets, and the first resource index is one of resource indexes corresponding to the first measurement set; and
differences between other link qualities except the first reference link quality among the link qualities of the resource indexes respectively corresponding to the one or more measurement sets and the first reference link quality.

In some embodiments, the first reference link quality is a highest link quality among the link qualities of the resource indexes respectively corresponding to one or more measurement sets; or
the first reference link quality is a lowest link quality among the link qualities of the resource indexes respectively corresponding to one or more measurement sets.

In some embodiments, the measurement report further includes first flag information, and the first flag information is used to indicate that the link quality of the first resource index is the first reference link quality.

In some other embodiments, the first reference link quality may also be notified to the network device through additional signaling or fields.

In order to further save reporting overhead, Table 3 shows a format of differential reporting with L1-RSRP. As shown in Table 3, the highest L1-RSRP may be selected from all Set Bₙ as a reference (for differential reporting), so it is sufficient to mark a resource set and a resource index to which the L1-RSRP belongs.

**Table 3**

| CSI report number | CSI fields |
|---|---|
| | PCI or PCI index or configuration index of candidate cell or Set B index #X (with highest L1-RSRP among all Set Bₙ, 1 ≤ n ≤ N) |
| | SSBRI or CRI (of PCI or PCI index or configuration index of candidate cell or Set B index #X with highest L1-RSRP) |
| | RSRP #1 (of PCI #X or Set B index #X) |
| | Differential RSRP #2 (of PCI #1 or Set B index #1) |
| CSI report #n | ... |
| | Differential RSRP #M (of PCI #1 or Set B index #1) |
| | ... |
| | **Differential** RSRP #1 (of PCI #N or Set B index #N) |
| | Differential RSRP #2 (of PCI #N or Set B index #N) |
| | ... |
| | Differential RSRP #M (of PCI #N or Set B index #N) |

In some embodiments, the measurement report includes:
a second reference link quality, the second reference link quality being a link quality of a second resource index corresponding to a second measurement set; where the second measurement set is any one of the one or more measurement sets, and the second resource index is one of resource indexes corresponding to the second measurement set; and
differences between other link qualities except the second reference link quality among link qualities of the resource indexes corresponding to the second measurement set and the second reference link quality.

In some embodiments, the second reference link quality is a highest link quality among the link qualities of the resource indexes corresponding to the second measurement set; or
the second reference link quality is a lowest link quality among the link qualities of the resource indexes corresponding to the second measurement set.

In some embodiments, the measurement report further includes second flag information, and the second flag information is used to indicate that the link quality of the second resource index is the second reference link quality.

In some other embodiments, the second reference link quality may also be notified to the network device through additional signaling or fields.

For example, differential reporting with L1-RSRP is shown in Table 4. In each Set Bₙ, the resource index with the highest L1-RSRP is marked, and the other resource indexes are arranged in a fixed order (such as ascending).

**Table 4**

| CSI report number | CSI fields |
|---|---|
| | SSBRI or CRI (of PCI #1 or Set B index #1) |
| | RSRP #1 (of PCI #1 or Set B index #1) |
| | Differential RSRP #2 (of PCI #1 or Set B index #1) |
| | ... |
| | Differential RSRP #M (of PCI #1 or Set B index #1) |
| CSI report #n | ... |
| | SSBRI or CRI (of PCI #N or Set B index #N) |
| | RSRP #1 (of PCI #N or Set B index #N) |
| | Differential RSRP #2 (of PCI #N or Set B index #N) |
| | ... |
| | Differential RSRP #M (of PCI #N or Set B index #N) |

In some embodiments, the measurement report includes:
link qualities of resource indexes corresponding to all or part of the one or more measurement sets; and
an identifier of a measurement set corresponding to a link quality included in the measurement report, and/or an identifier of a resource index corresponding to a link quality included in the measurement report.

The UE may flexibly report part or all of the measurement results of Set Bₙ (1 ≤ n ≤ N). Specifically, the UE may report the index of Set Bₙ or the PCI corresponding to the measurement set, PCI index, or a candidate cell index, followed by the link quality corresponding to each measurement resource in the measurement set, such as an L1-RSRP. A reporting format may be as shown in Table 5, where the number of measurement resources in Set Bₙ is represented by Xₙ.

**Table 5**

| CSI report number | CSI fields |
|---|---|
| CSI report #n | PCI or PCI index or configuration index of candidate cell or Set B index #1, if reported |
| | PCI or PCI index or configuration index of candidate cell or Set B index #2, if reported |
| | ... |
| | PCI or PCI index or configuration index of candidate cell or Set B index #N, if reported |
| | SSBRI or CRI (of PCI #1 or Set B index #1) |
| | RSRP #1 of PCI #1 or Set B index #1 |
| | Differential RSRP #2 of PCI #1 or Set B index #1 |
| | ... |
| | Differential RSRP #X_1 of PCI #1 or Set B index #1 |
| | ... |
| | SSBRI or CRI (of PCI #N or Set B index #N) |
| | RSRP #1 of PCI #N or Set B index #N |
| | Differential RSRP #2 of PCI #N or Set B index #N |
| | ... |
| | Differential RSRP #X_N of PCI #N or Set B index #N |

In some embodiments, reporting, by the terminal device, the measurement report to the network device according to the measurement results includes:
reporting sub-measurement reports respectively corresponding to the one or more measurement sets to the network device according to the measurement results;
where a sub-measurement report includes a link quality of a resource index in a corresponding measurement set.

Accordingly, receiving, by the network device, the measurement report reported, according to the measurement results, by the terminal device includes:
receiving sub-measurement reports respectively corresponding to the one or more measurement sets reported, according to the measurement results, by the terminal device;
where a sub-measurement report includes a link quality of a resource index in a corresponding measurement set.

In some embodiments, the sub-measurement report further includes an identifier of the corresponding measurement set; or
the sub-measurement report further includes the identifier of the corresponding measurement set and an identifier of the resource index corresponding to the link quality included in the sub-measurement report.

For example, the UE may report only the measurement result of one measurement set Set Bₙ in each reporting, as shown in Table 6. The NW needs to collect multiple reports from the UE as the input to the model. Of course, considering the flexibility of the NW-side model, the NW-side does not necessarily need to wait until measurement results of all measurement set Set Bₙ (1 ≤ n ≤ N) are collected before performing prediction.

**Table 6**

| CSI report number | CSI fields |
|---|---|
| | PCI or PCI index or configuration index of candidate cell or Set Bₙ index |
| | RSRP #1 |
| CSI report #n | Differential RSRP #2 |
| | ... |
| | Differential RSRP #Xn |

### Embodiment 2: Mobility Inference (Model Deployed on the NW Side)

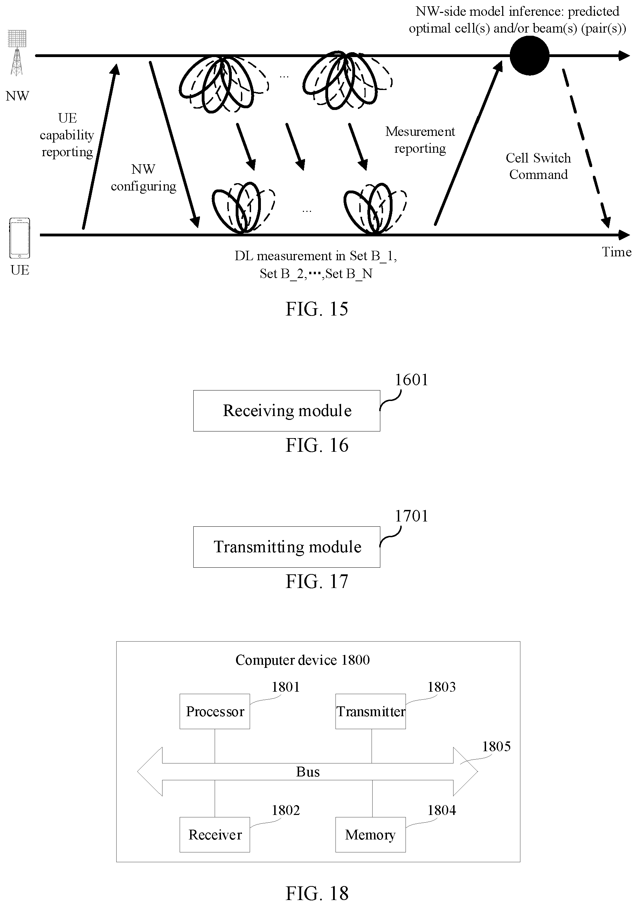

In this embodiment of the present disclosure, an AI/ML model is deployed on the NW-side, referring to FIG. 15, which shows a flow chart of spatial domain mobility prediction on the NW-side model. As shown in FIG. 15, the UE performs mobility measurement, i.e., measures Set Bₙ (1 ≤ n ≤ N), and reports measurement results to the NW. The AI/ML model deployed on the NW-side may perform prediction on spatial mobility.

### 1) UE capability reporting

Before the NW configures measurement resources required by the model for the UE, the UE needs to inform the NW through capability reporting whether the UE supports the measurement and reporting of the spatial domain mobility of the UE-side model. If the mobility is supported, the capabilities reported by the UE include, but are not limited to:
the maximum number of candidate cells supported for measurement on all downlink CCs/BWPs: for example, the maximum number of measurement sets that are configurable (generally, each measurement set corresponds to one candidate cell); and for another example, the maximum number of measurement sets that the UE can perform measurement simultaneously;
the maximum number of candidate cell measurement sets supported on one downlink CC/BWP: for example, in each measurement set Set Bₙ (1 ≤ n ≤ N), the maximum number of downlink SSB resources and/or CSI-RS resources that can be measured (including CSI-RS for mobility resources).

### 2) Network Configuration

The NW configures and/or activates the candidate cell measurement set Set Bₙ (1 ≤ n ≤ N) required for model input for the UE:
○,1 The NW uses RRC signaling to configure one or more groups of Set Bₙ (1 ≤ n ≤ N) for the UE. For example, multiple groups of Set Bₙ (1 ≤ n ≤ N) may be expressed as {Set B_{1X}, Set B_{2X}, ..., Set B_{NX}}, ..., {Set B_{1Z}, Set B_{2Z}, ..., Set B_{NZ}}; for another example, Set Bₙ as a downlink beam (pair) measurement set may include CSI-RS resources (including CSI-RS for mobility resources) and/or SSB resources.

O,2If the NW configures multiple groups of Set Bₙ (1 ≤ n ≤ N) for the UE, the NW further needs to use MAC CE signaling to activate one group of Set Bₙ (1 ≤ n ≤ N) among the multiple configurations according to the actual deployment and antenna configuration. Otherwise, the UE uses only a configured group of Set Bₙ (1 ≤ n ≤ N), for example, {Set B_{1X}, Set B_{2X}, ..., Set B_{NX}}. It will be noted that each Set Bₙ (1 ≤ n ≤ N) may have a different number N therein, such as N = 4 or 8.

After the measurement is completed, Set Bₙ (1≤n≤N) used for the input of the NW-side model may be reported to the NW according to the periodic or semi-persistent CSI reporting configured by the NW, or through the non-periodic CSI reporting dynamically triggered by the NW. In this embodiment, the model is only deployed on the NW-side, so the UE cannot predict whether a mobility event occurs and cannot complete autonomous measurement result reporting. The process of measurement and reporting of the mobility measurement set by the UE in Embodiment 2 may refer to the solutions shown in Table 2 to Table 6.

For the relationship of input-output of the NW-side model and the cell switch command involved in this embodiment, reference may be made to the description of Embodiment 1 described above.

Referring to FIG. 16, which shows a block diagram of a processing apparatus for measurement provided by an embodiment of the present disclosure, the processing apparatus for measurement has the functions of implementing the method shown in FIG. 7, FIG. 8 or FIG. 15 above, which is performed by the terminal device. As shown in FIG. 16, the apparatus may include:
a receiving module 1601, configured to receive measurement indication information, the measurement indication information being used to indicate that measurement is to be performed on spatial filters in one or more measurement sets to obtain measurement results.

Here, the measurement results are used to predict link qualities of spatial filters in one or more prediction sets to obtain prediction results.

In some embodiments, the prediction results are used to indicate one or more of the following items:
an optimal cell among cells corresponding to the one or more prediction sets;
an optimal spatial filter or an optimal spatial filter pair in the optimal cell; or
a link quality of the optimal spatial filter or the optimal spatial filter pair.

In some embodiments, the prediction results include one or more of the following items:
identifiers of L optimal cells among the cells corresponding to the one or more prediction sets, L being an integer greater than or equal to 1;
an index of an optimal spatial filter or an index of an optimal spatial filter pair in the L optimal cells; or
a link quality corresponding to the index of the optimal spatial filter, or a link quality corresponding to the index of the optimal spatial filter pair.

In some embodiments, an identifier of the optimal cell includes one or more of the following items: a physical cell identifier (PCI) of the optimal cell; a PCI index of the optimal cell; a configuration index of the optimal cell; or an index of a prediction set to which the optimal cell belongs.

In some embodiments, the index of the optimal spatial filter or the index of the optimal spatial filter pair includes:
a channel state information reference signal (CSI-RS) resource indicator (CRI) of the optimal spatial filter or the optimal spatial filter pair; and/or
a synchronization signal block (SSB) resource indicator (SSB RI) of the optimal spatial filter or the optimal spatial filter pair.

In some embodiments, the link quality includes one or more of the following items:
a layer 1 reference signal receiving power (L1-RSRP), a layer 1 signal to interference plus noise ratio (L1-SINR), a layer 1 received signal strength indicator (L1-RSSI), a layer 1 reference signal received quality (L1-RSRQ), or a channel quality indicator (CQI).

In some embodiments, the measurement indication information is used to configure the one or more measurement sets and/or to activate the one or more measurement sets.

In some embodiments, the receiving module 1601 is further configured to receive prediction indication information, the prediction indication information being used to configure the one or more prediction sets and/or to activate the one or more prediction sets.

In some embodiments, the apparatus further includes:
a transmitting module, configured to report capability information of a terminal device to a network device.

Here, the capability information is used to indicate capability of the terminal device to measure and/or predict spatial domain mobility; and the capability information of the terminal device is used by the network device to determine the one or more measurement sets and/or the one or more prediction sets.

In some embodiments, the capability information includes at least one of the following pieces of information:
whether the terminal device supports measurement and/or prediction on the spatial domain mobility;
in response that the terminal device supports measurement on the spatial domain mobility, a maximum number of candidate cells that the terminal device supports for measurement on all downlink component carriers (CCs)/bandwidth parts (BWPs);
in response that the terminal device supports prediction on the spatial domain mobility, a maximum number of candidate cells that the terminal device supports for prediction on all downlink CCs/BWPs;
in response that the terminal device supports measurement on the spatial domain mobility, a maximum number of measurement sets that the terminal device supports for measurement on one downlink CC/BWP; each measurement set corresponding to one cell; or
in response that the terminal device supports prediction on the spatial domain mobility, a maximum number of prediction sets that the terminal device supports for prediction on all downlink CCs/BWPs; each prediction set corresponding to one cell.

In some embodiments, the one or more prediction sets correspond to a current serving cell of the terminal device and one or more candidate cells of the terminal device, respectively.

In some embodiments, each measurement set in the one or more measurement sets corresponds to one cell.

The measurement results of the spatial filters in the one or more measurement sets include:
measurement results of downlink reference signal resources of cells corresponding to the one or more measurement sets on the spatial filters in the one or more measurement sets.

In some embodiments, the downlink reference signal resources include SSB resources and/or CSI-RS resources.

In some embodiments, in response that a process of predicting the link qualities of the spatial filters in the one or more prediction sets is performed by the terminal device, the transmitting module is further configured to report prediction information to a network device according to the prediction results.

In some embodiments, the transmitting module is configured to:
report the prediction information to the network device in a periodic manner; or
report the prediction information to the network device in a semi-persistent manner; or
report the prediction information to the network device in a non-periodic manner.

In some embodiments, the transmitting module is configured to report the prediction information to the network device according to an L1/L2 mobility event.

In some embodiments, the L1/L2 mobility event includes at least one of the following events that:
predicted link performance of a current serving cell is superior or inferior than a first threshold;
the predicted link performance of the current serving cell is superior or inferior than predicted link performance of a candidate cell plus a first offset;
the predicted link performance of the candidate cell is superior or inferior than a second threshold; or
the predicted link performance of the current serving cell is inferior than a point threshold, and the predicted link performance of the candidate cell is superior than a fourth threshold.

In some embodiments, in response that a process of predicting the link qualities of the spatial filters in the one or more prediction sets is performed by the terminal device, the transmitting module is further configured to transmit a cell switch request to a network device according to the prediction results.

In some embodiments, the cell switch request includes the prediction results.

In some embodiments, in response that a process of predicting the link qualities of the spatial filters in the one or more prediction sets is performed by a network device, the transmitting module is further configured to report a measurement report to the network device according to the measurement results.

In some embodiments, the measurement report includes:
link qualities of resource indexes respectively corresponding to the one or more measurement sets.

Here, the link qualities of the resource indexes respectively corresponding to the one or more measurement sets are arranged according to an arrangement order of the one or more measurement sets and an arrangement order of resource indexes corresponding to each measurement set.

In some embodiments, the measurement report includes:
differences between link qualities of resource indexes respectively corresponding to the one or more measurement sets and a reference link quality.

Here, the differences between the link qualities of the resource indexes respectively corresponding to the one or more measurement sets and the reference link quality are arranged according to an arrangement order of the one or more measurement sets and an arrangement order of resource indexes corresponding to each measurement set.

In some embodiments, the measurement report includes:
a first reference link quality, the first reference link quality being a link quality of a first resource index corresponding to a first measurement set; where the first measurement set is one of the one or more measurement sets, and the first resource index is one of resource indexes corresponding to the first measurement set; and
differences between other link qualities except the first reference link quality among the link qualities of the resource indexes respectively corresponding to the one or more measurement sets and the first reference link quality.

In some embodiments, the first reference link quality is a highest link quality among the link qualities of the resource indexes respectively corresponding to one or more measurement sets; or
the first reference link quality is a lowest link quality among the link qualities of the resource indexes respectively corresponding to one or more measurement sets.

In some embodiments, the measurement report further includes first flag information, and the first flag information is used to indicate that the link quality of the first resource index is the first reference link quality.

In some embodiments, the measurement report includes:
a second reference link quality, the second reference link quality being a link quality of a second resource index corresponding to a second measurement set; where the second measurement set is any one of the one or more measurement sets, and the second resource index is one of resource indexes corresponding to the second measurement set; and
differences between other link qualities except the second reference link quality among link qualities of the resource indexes corresponding to the second measurement set and the second reference link quality.

In some embodiments, the second reference link quality is a highest link quality among the link qualities of the resource indexes corresponding to the second measurement set; or
the second reference link quality is a lowest link quality among the link qualities of the resource indexes corresponding to the second measurement set.

In some embodiments, the measurement report further includes second flag information, and the second flag information is used to indicate that the link quality of the second resource index is the second reference link quality.

In some embodiments, the measurement report includes:
link qualities of resource indexes corresponding to all or part of the one or more measurement sets; and
an identifier of a measurement set corresponding to a link quality included in the measurement report, and/or an identifier of a resource index corresponding to a link quality included in the measurement report.

In some embodiments, the transmitting module is configured to report sub-measurement reports respectively corresponding to the one or more measurement sets to the network device according to the measurement results; where a sub-measurement report includes a link quality of a resource index in a corresponding measurement set.

In some embodiments, the sub-measurement report further includes an identifier of the corresponding measurement set; or
the sub-measurement report further includes the identifier of the corresponding measurement set and an identifier of the resource index corresponding to the link quality included in the sub-measurement report.

Referring to FIG. 17, which shows a block diagram of a processing apparatus for measurement provided by an embodiment of the present disclosure, the processing apparatus for measurement has the functions of implementing the method shown in FIG. 7, FIG. 8 or FIG. 15 above, which is performed by the network device. As shown in FIG. 17, the apparatus may include:
a transmitting module 1701, configured to transmit measurement indication information to a terminal device, where the measurement indication information is used to indicate that the terminal device is to perform measurement on spatial filters in one or more measurement sets to obtain measurement results.

Here, the measurement results are used to predict link qualities of spatial filters in one or more prediction sets to obtain prediction results.

In some embodiments, the prediction results are used to indicate one or more of the following items:
an optimal cell among cells corresponding to the one or more prediction sets;
an optimal spatial filter or an optimal spatial filter pair in the optimal cell; or
a link quality of the optimal spatial filter or the optimal spatial filter pair.

In some embodiments, the prediction results include one or more of the following items:
identifiers of L optimal cells among the cells corresponding to the one or more prediction sets, L being an integer greater than or equal to 1;
an index of an optimal spatial filter or an index of an optimal spatial filter pair in the L optimal cells; or
a link quality corresponding to the index of the optimal spatial filter, or a link quality corresponding to the index of the optimal spatial filter pair.

In some embodiments, an identifier of the optimal cell includes one or more of the following items: a physical cell identifier (PCI) of the optimal cell; a PCI index of the optimal cell; a configuration index of the optimal cell; or an index of a prediction set to which the optimal cell belongs.

In some embodiments, the index of the optimal spatial filter or the index of the optimal spatial filter pair includes:
a CSI-RS resource indicator (CRI) of the optimal spatial filter or the optimal spatial filter pair; and/or
an SSB resource indicator (SSB RI) of the optimal spatial filter or the optimal spatial filter pair.

In some embodiments, the link quality includes one or more of the following items: an L1-RSRP, an L1-SINR, an L1-RSSI, an L1-RSRQ, or a CQI.

In some embodiments, the measurement indication information is used to configure the one or more measurement sets and/or to activate the one or more measurement sets.

In some embodiments, the transmitting module 1701 is further configured to transmit prediction indication information to the terminal device, the prediction indication information being used to configure the one or more prediction sets and/or to activate the one or more prediction sets.

In some embodiments, the apparatus further includes:
a receiving module, configured to receive capability information of the terminal device reported by the terminal device, the capability information being used to indicate capability of the terminal device to measure and/or predict spatial domain mobility; and
a determining module, configured to determine the one or more measurement sets and/or the one or more prediction sets according to the capability information of the terminal device.

In some embodiments, the capability information includes at least one of the following pieces of information:
whether the terminal device supports measurement and/or prediction on the spatial domain mobility;
in response that the terminal device supports measurement on the spatial domain mobility, a maximum number of candidate cells that the terminal device supports for measurement on all downlink CCs/BWPs;
in response that the terminal device supports prediction on the spatial domain mobility, a maximum number of candidate cells that the terminal device supports for prediction on all downlink CCs/BWPs;
in response that the terminal device supports measurement on the spatial domain mobility, a maximum number of measurement sets that the terminal device supports for measurement on one downlink CC/BWP; each measurement set corresponding to one cell; or
in response that the terminal device supports prediction on the spatial domain mobility, a maximum number of prediction sets that the terminal device supports for prediction on all downlink CCs/BWPs; each prediction set corresponding to one cell.

In some embodiments, the one or more prediction sets correspond to a current serving cell of the terminal device and one or more candidate cells of the terminal device, respectively.

In some embodiments, each measurement set in the one or more measurement sets corresponds to one cell.

The measurement results of the spatial filters in the one or more measurement sets include:
measurement results of downlink reference signal resources of cells corresponding to the one or more measurement sets on the spatial filters in the one or more measurement sets.

In some embodiments, the downlink reference signal resources include SSB resources and/or CSI-RS resources.

In some embodiments, in response that a process of predicting the link qualities of the spatial filters in the one or more prediction sets is performed by the terminal device, the receiving module is further configured to receive prediction information reported, according to the prediction results, by the terminal device.

In some embodiments, receiving the prediction information reported, according to the prediction results, by the terminal device includes:
receiving the prediction information reported, in a periodic manner, by the terminal device; or
receiving the prediction information reported, in a semi-persistent manner, by the terminal device; or
receiving the prediction information reported, in a non-periodic manner, by the terminal device.

In some embodiments, the receiving module is configured to receive the prediction information reported, according to an L1/L2 mobility event, by the terminal device.

In some embodiments, the L1/L2 mobility event includes at least one of the following events that:
predicted link performance of a current serving cell is superior or inferior than a first threshold;
the predicted link performance of the current serving cell is superior or inferior than predicted link performance of a candidate cell plus a first offset;
the predicted link performance of the candidate cell is superior or inferior than a second threshold; or
the predicted link performance of the current serving cell is inferior than a point threshold, and the predicted link performance of the candidate cell is superior than a fourth threshold.

In some embodiments, in response that a process of predicting the link qualities of the spatial filters in the one or more prediction sets is performed by the terminal device, the receiving module is further configured to receive a cell switch request transmitted, according to the prediction results, by the terminal device.

In some embodiments, the cell switch request includes the prediction results.

In some embodiments, in response that a process of predicting the link qualities of the spatial filters in the one or more prediction sets is performed by a network device, the receiving module is further configured to receive a measurement report reported, according to the measurement results, by the terminal device.

In some embodiments, the measurement report includes:
link qualities of resource indexes respectively corresponding to the one or more measurement sets.

Here, the link qualities of the resource indexes respectively corresponding to the one or more measurement sets are arranged according to an arrangement order of the one or more measurement sets and an arrangement order of resource indexes corresponding to each measurement set.

In some embodiments, the measurement report includes:
differences between link qualities of resource indexes respectively corresponding to the one or more measurement sets and a reference link quality.

Here, the differences between the link qualities of the resource indexes respectively corresponding to the one or more measurement sets and the reference link quality are arranged according to an arrangement order of the one or more measurement sets and an arrangement order of resource indexes corresponding to each measurement set.

In some embodiments, the measurement report includes:
a first reference link quality, the first reference link quality being a link quality of a first resource index corresponding to a first measurement set; where the first measurement set is one of the one or more measurement sets, and the first resource index is one of resource indexes corresponding to the first measurement set; and
differences between other link qualities except the first reference link quality among the link qualities of the resource indexes respectively corresponding to the one or more measurement sets and the first reference link quality.

In some embodiments, the first reference link quality is a highest link quality among the link qualities of the resource indexes respectively corresponding to one or more measurement sets; or
the first reference link quality is a lowest link quality among the link qualities of the resource indexes respectively corresponding to one or more measurement sets.

In some embodiments, the measurement report further includes first flag information, and the first flag information is used to indicate that the link quality of the first resource index is the first reference link quality.

In some embodiments, the measurement report includes:
a second reference link quality, the second reference link quality being a link quality of a second resource index corresponding to a second measurement set; where the second measurement set is any one of the one or more measurement sets, and the second resource index is one of resource indexes corresponding to the second measurement set; and
differences between other link qualities except the second reference link quality among link qualities of the resource indexes corresponding to the second measurement set and the second reference link quality.

In some embodiments, the second reference link quality is a highest link quality among the link qualities of the resource indexes corresponding to the second measurement set; or
the second reference link quality is a lowest link quality among the link qualities of the resource indexes corresponding to the second measurement set.

In some embodiments, the measurement report further includes second flag information, and the second flag information is used to indicate that the link quality of the second resource index is the second reference link quality.

In some embodiments, the measurement report includes:
link qualities of resource indexes corresponding to all or part of the one or more measurement sets; and
an identifier of a measurement set corresponding to a link quality included in the measurement report, and/or an identifier of a resource index corresponding to a link quality included in the measurement report.

In some embodiments, the receiving module is configured to receive sub-measurement reports respectively corresponding to the one or more measurement sets reported, according to the measurement results, by the terminal device; where a sub-measurement report includes a link quality of a resource index in a corresponding measurement set.

In some embodiments, the sub-measurement report further includes an identifier of the corresponding measurement set; or
the sub-measurement report further includes the identifier of the corresponding measurement set and an identifier of the resource index corresponding to the link quality included in the sub-measurement report.

It will be noted that the apparatus provided in the above embodiments uses the division of the various functional modules described above as an example to implement its functions. In practical applications, the functions described above may be assigned to different functional modules according to actual needs, meaning the content structure of the apparatus may be partitioned into different functional modules to accomplish all or part of the functions described above.

Regarding the apparatus in the above embodiments, the specific manner in which each module performs operations has been described in detail in method embodiments, and will not be elaborated here.

Referring to FIG. 18, which shows a schematic structure diagram of a communication device 1800 provided by an embodiment of the present disclosure, the communication device 1800 may include a processor 1801, a receiver 1802, a transmitter 1803, a memory 1804, and a bus 1805.

The processor 1801 includes one or more than one processing cores. The processor 1801 executes various functional applications and information processing by running software programs and modules.

The receiver 1802 and the transmitter 1803 may be implemented as one communication component, which may be a communication chip. The communication chip may also be referred to as a transceiver. The memory 1804 is connected to the processor 1801 via the bus 1805. The memory 1804 may be used to store a computer program, and the processor 1801 is used to execute the computer program to implement each step in the above method embodiments.

In addition, the memory 1804 may be implemented by any type of volatile or non-volatile storage device or a combination thereof. The volatile or non-volatile storage device includes, but not limited to: a magnetic disk or an optical disk, an electrically erasable programmable read-only memory, an erasable programmable read-only memory, a static random access memory, a read-only memory, a magnetic memory, a flash memory, or a programmable read-only memory.

In an exemplary solution, in a case where the communication device 1800 is implemented as the terminal device described above, the receiver 1802 and the processor 1801 execute the computer program, to enable the communication device to implement the various steps performed by the terminal device in the method shown in any one of FIG. 7, FIG. 8 and FIG. 15. In this case, the receiver 1802 may correspondingly implement the method and steps implemented by the receiving module 1601 in FIG. 16, and the transmitter 1803 may correspondingly implement the method and steps implemented by the transmitting module in FIG. 16.

In an exemplary solution, in a case where the communication device 1800 is implemented as the network device described above, the receiver 1802 and the processor 1801 execute the computer program, to enable the communication device to implement the various steps performed by the network device in the method shown in any one of FIG. 7, FIG. 8 and FIG. 15. In this case, the transmitter 1803 may correspondingly implement the method and steps implemented by the transmitting module 1701 in FIG. 17, and the receiver 1802 may correspondingly implement the method and steps implemented by the receiving module in FIG. 17.

The embodiments of the present disclosure further provide a computer-readable storage medium, which has stored therein a computer program. The computer program is loaded and executed by a processor to implement all or part of the steps performed by the terminal device or the network device in the method shown in FIG. 7, FIG. 8 or FIG. 15 above.

The present disclosure further provides a chip, which is used to be operated in a communication device, to enable the communication device to perform all or part of the steps performed by the terminal device or the network device in the method shown in FIG. 7, FIG. 8 or FIG. 15 above.

The present disclosure further provides a computer program product. The computer program product or computer program includes computer instructions stored in a computer-readable storage medium. A processor of a communication device reads the computer instructions from the computer-readable storage medium, and the processor executes the computer instructions, to enable the communication device to perform all or part of the steps performed by the terminal device or the network device in the method shown in FIG. 7, FIG. 8 or FIG. 15 above.

The present disclosure further provides a computer program, which is executed by a processor of a communication device to implement all or part of the steps performed by the terminal device or the network device in the method shown in FIG. 7, FIG. 8 or FIG. 15 above.

Those skilled in the art should be aware that in one or more of the above examples, the functions described in the embodiments of the present disclosure may be implemented by hardware, software, firmware, or any combination thereof. When implemented using software, these functions may be stored in a computer-readable medium or transmitted as one or more instructions or codes on the computer-readable medium. Computer-readable media include a computer storage medium and a communication medium, in which the communication medium includes any medium capable of transmitting computer programs from one place to another, and the storage medium may be any available medium accessible by general-purpose or special-purpose computers.

The above description is merely exemplary embodiments of the present disclosure and is not intended to limit the present disclosure. Any modifications, equivalent replacements, improvements, etc., made within the spirit and principles of the present disclosure shall be included in the scope of protection of the present disclosure.

## Claims

1. A processing method for measurement, the method being performed by a terminal device and comprising:
receiving measurement indication information, the measurement indication information being used to indicate that measurement is to be performed on spatial filters in one or more measurement sets to obtain measurement results;
wherein the measurement results are used to predict link qualities of spatial filters in one or more prediction sets to obtain prediction results.

2. The method according to claim 1, wherein the prediction results are used to indicate one or more of following items:
an optimal cell among cells corresponding to the one or more prediction sets;
an optimal spatial filter or an optimal spatial filter pair in the optimal cell; or
a link quality of the optimal spatial filter or the optimal spatial filter pair.

3. The method according to claim 2, wherein the prediction results comprise one or more of following items:
identifiers of L optimal cells among the cells corresponding to the one or more prediction sets, L being an integer greater than or equal to 1;
an index of an optimal spatial filter or an index of an optimal spatial filter pair in the L optimal cells; or
a link quality corresponding to the index of the optimal spatial filter, or a link quality corresponding to the index of the optimal spatial filter pair.

4. The method according to claim 3, wherein an identifier of the optimal cell comprises one or more of following items:
a physical cell identifier (PCI) of the optimal cell;
a PCI index of the optimal cell;
a configuration index of the optimal cell; or
an index of a prediction set to which the optimal cell belongs.

5. The method according to claim 3 or 4, wherein the index of the optimal spatial filter or the index of the optimal spatial filter pair comprises:
a channel state information reference signal (CSI-RS) resource indicator (CRI) of the optimal spatial filter or the optimal spatial filter pair; and/or
a synchronization signal block (SSB) resource indicator (SSB RI) of the optimal spatial filter or the optimal spatial filter pair.

6. The method according to any one of claims 3 to 5, wherein the link quality comprises one or more of following items:
a layer 1 reference signal receiving power (L1-RSRP), a layer 1 signal to interference plus noise ratio (L1-SINR), a layer 1 received signal strength indicator (L1-RSSI), a layer 1 reference signal received quality (L1-RSRQ), or a channel quality indicator (CQI).

7. The method according to any one of claims 1 to 6, wherein the measurement indication information is used to configure the one or more measurement sets and/or to activate the one or more measurement sets.

8. The method according to any one of claims 1 to 7, further comprising:
receiving prediction indication information, the prediction indication information being used to configure the one or more prediction sets and/or to activate the one or more prediction sets.

9. The method according to any one of claims 1 to 8, further comprising:
reporting capability information of the terminal device to a network device;
wherein the capability information is used to indicate capability of the terminal device to measure and/or predict spatial domain mobility; and the capability information of the terminal device is used by the network device to determine the one or more measurement sets and/or the one or more prediction sets.

10. The method according to claim 9, wherein the capability information comprises at least one of following pieces of information:
whether the terminal device supports measurement and/or prediction on the spatial domain mobility;
in response that the terminal device supports measurement on the spatial domain mobility, a maximum number of candidate cells that the terminal device supports for measurement on all downlink component carriers (CCs)/bandwidth parts (BWPs);
in response that the terminal device supports prediction on the spatial domain mobility, a maximum number of candidate cells that the terminal device supports for prediction on all downlink CCs/BWPs;
in response that the terminal device supports measurement on the spatial domain mobility, a maximum number of measurement sets that the terminal device supports for measurement on one downlink CC/BWP; each measurement set corresponding to one cell; or
in response that the terminal device supports prediction on the spatial domain mobility, a maximum number of prediction sets that the terminal device supports for prediction on all downlink CCs/BWPs; each prediction set corresponding to one cell.

11. The method according to any one of claims 1 to 10, wherein the one or more prediction sets correspond to a current serving cell of the terminal device and one or more candidate cells of the terminal device, respectively.

12. The method according to any one of claims 1 to 11, wherein each measurement set in the one or more measurement sets corresponds to one cell, and the measurement results of the spatial filters in the one or more measurement sets comprise:
measurement results of downlink reference signal resources of cells corresponding to the one or more measurement sets on the spatial filters in the one or more measurement sets.

13. The method according to claim 12, wherein the downlink reference signal resources comprise SSB resources and/or CSI-RS resources.

14. The method according to any one of claims 1 to 13, wherein in response that a process of predicting the link qualities of the spatial filters in the one or more prediction sets is performed by the terminal device, the method further comprises:
reporting prediction information to a network device according to the prediction results.

15. The method according to claim 14, wherein reporting the prediction information to the network device according to the prediction results comprises:
reporting the prediction information to the network device in a periodic manner; or
reporting the prediction information to the network device in a semi-persistent manner; or
reporting the prediction information to the network device in a non-periodic manner.

16. The method according to claim 14, wherein reporting the prediction information to the network device according to the prediction results comprises:
reporting the prediction information to the network device according to an L1/L2 mobility event.

17. The method according to claim 16, wherein the L1/L2 mobility event comprises at least one of following events that:
predicted link performance of a current serving cell is superior or inferior than a first threshold;
the predicted link performance of the current serving cell is superior or inferior than predicted link performance of a candidate cell plus a first offset;
the predicted link performance of the candidate cell is superior or inferior than a second threshold; or
the predicted link performance of the current serving cell is inferior than a point threshold, and the predicted link performance of the candidate cell is superior than a fourth threshold.

18. The method according to any one of claims 1 to 13, wherein in response that a process of predicting the link qualities of the spatial filters in the one or more prediction sets is performed by the terminal device, the method further comprises:
transmitting a cell switch request to a network device according to the prediction results.

19. The method according to claim 18, wherein the cell switch request comprises the prediction results.

20. The method according to any one of claims 1 to 13, wherein in response that a process of predicting the link qualities of the spatial filters in the one or more prediction sets is performed by a network device, the method further comprises:
reporting a measurement report to the network device according to the measurement results.

21. The method according to claim 20, wherein the measurement report comprises:
link qualities of resource indexes respectively corresponding to the one or more measurement sets;
wherein the link qualities of the resource indexes respectively corresponding to the one or more measurement sets are arranged according to an arrangement order of the one or more measurement sets and an arrangement order of resource indexes corresponding to each of the measurement sets.

22. The method according to claim 20, wherein the measurement report comprises:
differences between link qualities of resource indexes respectively corresponding to the one or more measurement sets and a reference link quality;
wherein the differences between the link qualities of the resource indexes respectively corresponding to the one or more measurement sets and the reference link quality are arranged according to an arrangement order of the one or more measurement sets and an arrangement order of resource indexes corresponding to each of the measurement sets.

23. The method according to claim 22, wherein the measurement report comprises:
a first reference link quality, the first reference link quality being a link quality of a first resource index corresponding to a first measurement set; wherein the first measurement set is one of the one or more measurement sets, and the first resource index is one of resource indexes corresponding to the first measurement set; and
differences between other link qualities except the first reference link quality among the link qualities of the resource indexes respectively corresponding to the one or more measurement sets and the first reference link quality.

24. The method according to claim 23, wherein
the first reference link quality is a highest link quality among the link qualities of the resource indexes respectively corresponding to one or more measurement sets; or
the first reference link quality is a lowest link quality among the link qualities of the resource indexes respectively corresponding to one or more measurement sets.

25. The method according to claim 23 or 24, wherein the measurement report further comprises first flag information, and the first flag information is used to indicate that the link quality of the first resource index is the first reference link quality.

26. The method according to claim 22, wherein the measurement report comprises:
a second reference link quality, the second reference link quality being a link quality of a second resource index corresponding to a second measurement set; wherein the second measurement set is any one of the one or more measurement sets, and the second resource index is one of resource indexes corresponding to the second measurement set; and
differences between other link qualities except the second reference link quality among link qualities of the resource indexes corresponding to the second measurement set and the second reference link quality.

27. The method according to claim 26, wherein
the second reference link quality is a highest link quality among the link qualities of the resource indexes corresponding to the second measurement set; or
the second reference link quality is a lowest link quality among the link qualities of the resource indexes corresponding to the second measurement set.

28. The method according to claim 26 or 27, wherein the measurement report further comprises second flag information, and the second flag information is used to indicate that the link quality of the second resource index is the second reference link quality.

29. The method according to claim 20, wherein the measurement report comprises:
link qualities of resource indexes corresponding to all or part of the one or more measurement sets; and
an identifier of a measurement set corresponding to a link quality comprised in the measurement report, and/or an identifier of a resource index corresponding to a link quality comprised in the measurement report.

30. The method according to claim 20, wherein reporting the measurement report to the network device according to the measurement results comprises:
reporting sub-measurement reports respectively corresponding to the one or more measurement sets to the network device according to the measurement results;
wherein a sub-measurement report comprises a link quality of a resource index in a corresponding measurement set.

31. The method according to claim 30, wherein the sub-measurement report further comprises an identifier of the corresponding measurement set; or
the sub-measurement report further comprises the identifier of the corresponding measurement set and an identifier of the resource index corresponding to the link quality comprised in the sub-measurement report.

32. A processing method for measurement, the method being performed by a network device and comprising:
transmitting measurement indication information to a terminal device, the measurement indication information being used to indicate that the terminal device is to perform measurement on spatial filters in one or more measurement sets to obtain measurement results;
wherein the measurement results are used to predict link qualities of spatial filters in one or more prediction sets to obtain prediction results.

33. The method according to claim 32, wherein the prediction results are used to indicate one or more of following items:
an optimal cell among cells corresponding to the one or more prediction sets;
an optimal spatial filter or an optimal spatial filter pair in the optimal cell; or
a link quality of the optimal spatial filter or the optimal spatial filter pair.

34. The method according to claim 33, wherein the prediction results comprise one or more of following items:
identifiers of L optimal cells among the cells corresponding to the one or more prediction sets, L being an integer greater than or equal to 1;
an index of an optimal spatial filter or an index of an optimal spatial filter pair in the L optimal cells; or
a link quality corresponding to the index of the optimal spatial filter, or a link quality corresponding to the index of the optimal spatial filter pair.

35. The method according to claim 34, wherein an identifier of the optimal cell comprises one or more of following items:
a physical cell identifier (PCI) of the optimal cell;
a PCI index of the optimal cell;
a configuration index of the optimal cell; or
an index of a prediction set to which the optimal cell belongs.

36. The method according to claim 34 or 35, wherein the index of the optimal spatial filter or the index of the optimal spatial filter pair comprises:
a CSI-RS resource indicator (CRI) of the optimal spatial filter or the optimal spatial filter pair; and/or
an SSB resource indicator (SSB RI) of the optimal spatial filter or the optimal spatial filter pair.

37. The method according to any one of claims 34 to 36, wherein the link quality comprises one or more of following items:
an L1-RSRP, an L1-SINR, an L1-RSSI, an L1-RSRQ, or a CQI.

38. The method according to any one of claims 32 to 37, wherein the measurement indication information is used to configure the one or more measurement sets and/or to activate the one or more measurement sets.

39. The method according to any one of claims 32 to 38, further comprising:
transmitting prediction indication information to the terminal device, the prediction indication information being used to configure the one or more prediction sets and/or to activate the one or more prediction sets.

40. The method according to any one of claims 32 to 39, further comprising:
receiving capability information of the terminal device reported by the terminal device, the capability information being used to indicate capability of the terminal device to measure and/or predict spatial domain mobility; and
determining the one or more measurement sets and/or the one or more prediction sets according to the capability information of the terminal device.

41. The method according to claim 40, wherein the capability information comprises at least one of following pieces of information:
whether the terminal device supports measurement and/or prediction on the spatial domain mobility;
in response that the terminal device supports measurement on the spatial domain mobility, a maximum number of candidate cells that the terminal device supports for measurement on all downlink CCs/BWPs;
in response that the terminal device supports prediction on the spatial domain mobility, a maximum number of candidate cells that the terminal device supports for prediction on all downlink CCs/BWPs;
in response that the terminal device supports measurement on the spatial domain mobility, a maximum number of measurement sets that the terminal device supports for measurement on one downlink CC/BWP; each measurement set corresponding to one cell; or
in response that the terminal device supports prediction on the spatial domain mobility, a maximum number of prediction sets that the terminal device supports for prediction on all downlink CCs/BWPs; each prediction set corresponding to one cell.

42. The method according to any one of claims 32 to 41, wherein the one or more prediction sets correspond to a current serving cell of the terminal device and one or more candidate cells of the terminal device, respectively.

43. The method according to any one of claims 32 to 42, wherein each measurement set in the one or more measurement sets corresponds to one cell, and the measurement results of the spatial filters in the one or more measurement sets comprise:
measurement results of downlink reference signal resources of cells corresponding to the one or more measurement sets on the spatial filters in the one or more measurement sets.

44. The method according to claim 43, wherein the downlink reference signal resources comprise SSB resources and/or CSI-RS resources.

45. The method according to any one of claims 32 to 44, wherein in response that a process of predicting the link qualities of the spatial filters in the one or more prediction sets is performed by the terminal device, the method further comprises:
receiving prediction information reported, according to the prediction results, by the terminal device.

46. The method according to claim 45, wherein receiving the prediction information reported, according to the prediction results, by the terminal device comprises:
receiving the prediction information reported, in a periodic manner, by the terminal device; or
receiving the prediction information reported, in a semi-persistent manner, by the terminal device; or
receiving the prediction information reported, in a non-periodic manner, by the terminal device.

47. The method according to claim 45, wherein receiving the prediction information reported by the terminal device according to the prediction results comprises:
receiving the prediction information reported, according to an L1/L2 mobility event, by the terminal device.

48. The method according to claim 47, wherein the L1/L2 mobility event comprises at least one of following events that:
predicted link performance of a current serving cell is superior or inferior than a first threshold;
the predicted link performance of the current serving cell is superior or inferior than predicted link performance of a candidate cell plus a first offset;
the predicted link performance of the candidate cell is superior or inferior than a second threshold; or
the predicted link performance of the current serving cell is inferior than a point threshold, and the predicted link performance of the candidate cell is superior than a fourth threshold.

49. The method according to any one of claims 32 to 44, wherein in response that a process of predicting the link qualities of the spatial filters in the one or more prediction sets is performed by the terminal device, the method further comprises:
receiving a cell switch request transmitted, according to the prediction results, by the terminal device.

50. The method according to claim 49, wherein the cell switch request comprises the prediction results.

51. The method according to any one of claims 32 to 44, wherein in response that a process of predicting the link qualities of the spatial filters in the one or more prediction sets is performed by a network device, the method further comprises:
receiving a measurement report reported, according to the measurement results, by the terminal device.

52. The method according to claim 51, wherein the measurement report comprises:
link qualities of resource indexes respectively corresponding to the one or more measurement sets;
wherein the link qualities of the resource indexes respectively corresponding to the one or more measurement sets are arranged according to an arrangement order of the one or more measurement sets and an arrangement order of resource indexes corresponding to each of the measurement sets.

53. The method according to claim 51, wherein the measurement report comprises:
differences between link qualities of resource indexes respectively corresponding to the one or more measurement sets and a reference link quality;
wherein the differences between the link qualities of the resource indexes respectively corresponding to the one or more measurement sets and the reference link quality are arranged according to an arrangement order of the one or more measurement sets and an arrangement order of resource indexes corresponding to each of the measurement sets.

54. The method according to claim 53, wherein the measurement report comprises:
a first reference link quality, the first reference link quality being a link quality of a first resource index corresponding to a first measurement set; wherein the first measurement set is one of the one or more measurement sets, and the first resource index is one of resource indexes corresponding to the first measurement set; and
differences between other link qualities except the first reference link quality among the link qualities of the resource indexes respectively corresponding to the one or more measurement sets and the first reference link quality.

55. The method according to claim 54, wherein
the first reference link quality is a highest link quality among the link qualities of the resource indexes respectively corresponding to one or more measurement sets; or
the first reference link quality is a lowest link quality among the link qualities of the resource indexes respectively corresponding to one or more measurement sets.

56. The method according to claim 54 or 55, wherein the measurement report further comprises first flag information, and the first flag information is used to indicate that the link quality of the first resource index is the first reference link quality.

57. The method according to claim 53, wherein the measurement report comprises:
a second reference link quality, the second reference link quality being a link quality of a second resource index corresponding to a second measurement set; wherein the second measurement set is any one of the one or more measurement sets, and the second resource index is one of resource indexes corresponding to the second measurement set; and
differences between other link qualities except the second reference link quality among link qualities of the resource indexes corresponding to the second measurement set and the second reference link quality.

58. The method according to claim 57, wherein
the second reference link quality is a highest link quality among the link qualities of the resource indexes corresponding to the second measurement set; or
the second reference link quality is a lowest link quality among the link qualities of the resource indexes corresponding to the second measurement set.

59. The method according to claim 57 or 58, wherein the measurement report further comprises second flag information, and the second flag information is used to indicate that the link quality of the second resource index is the second reference link quality.

60. The method according to claim 51, wherein the measurement report comprises:
link qualities of resource indexes corresponding to all or part of the one or more measurement sets; and
an identifier of a measurement set corresponding to a link quality comprised in the measurement report, and/or an identifier of a resource index corresponding to a link quality comprised in the measurement report.

61. The method according to claim 51, wherein receiving the measurement report reported, according to the measurement results, by the terminal device comprises:
receiving sub-measurement reports respectively corresponding to the one or more measurement sets reported, according to the measurement results, by the terminal device;
wherein a sub-measurement report comprises a link quality of a resource index in a corresponding measurement set.

62. The method according to claim 61, wherein the sub-measurement report further comprises an identifier of the corresponding measurement set; or
the sub-measurement report further comprises the identifier of the corresponding measurement set and an identifier of the resource index corresponding to the link quality comprised in the sub-measurement report.

63. A processing apparatus for measurement, comprising:
a receiving module, configured to receive measurement indication information, the measurement indication information being used to indicate that measurement is to be performed on spatial filters in one or more measurement sets to obtain measurement results;
wherein the measurement results are used to predict link qualities of spatial filters in one or more prediction sets to obtain prediction results.

64. A processing apparatus for measurement, comprising:
a transmitting module, configured to transmit measurement indication information to a terminal device, the measurement indication information being used to indicate that the terminal device is to perform measurement on spatial filters in one or more measurement sets to obtain measurement results;
wherein the measurement results are used to predict link qualities of spatial filters in one or more prediction sets to obtain prediction results.

65. A terminal device, the terminal device comprising a processor, a memory and a transceiver; wherein the memory has stored therein a computer program, and the processor executes the computer program, to enable the terminal device to implement the processing method for measurement according to any one of claims 1 to 31.

66. A network device, the terminal device comprising a processor, a memory and a transceiver; wherein the memory has stored therein a computer program, and the processor executes the computer program, to enable the network device to implement the processing method for measurement according to any one of claims 32 to 32.

67. A computer-readable storage medium, wherein the storage medium has stored therein a computer program, and the computer program is configured to be executed by a processor of a communication device, to enable the communication device to implement the processing method for measurement according to any one of claims 1 to 62.

68. A chip, wherein the chip is used to be operated in a communication device, to enable the communication device to perform the processing method for measurement according to any one of claims 1 to 62.

69. A computer program product, the computer program product comprising computer instructions that are stored in a computer-readable storage medium; wherein a processor of a communication device reads the computer instructions from the computer-readable storage medium and executes the computer instructions, to enable the communication device to perform the processing method for measurement according to any one of claims 1 to 62.

70. A computer program, wherein the computer program is executed by a processor of a communication device, to enable the communication device to implement the processing method for measurement according to any one of claims 1 to 62.
